(19) Europäisches Patentamt / European Patent Office / Office européen des brevets

(11) **EP 3 989 151 A1**

(12) **EUROPEAN PATENT APPLICATION**
published in accordance with Art. 153(4) EPC

(43) Date of publication:
**27.04.2022 Bulletin 2022/17**

(21) Application number: **20913710.8**

(22) Date of filing: **16.01.2020**

(51) International Patent Classification (IPC):
**G06Q 20/40** (2012.01)    **G06Q 30/00** (2012.01)
**H04L 9/30** (2006.01)

(52) Cooperative Patent Classification (CPC):
**G06Q 20/40; G06Q 30/00; H04L 9/30**

(86) International application number:
**PCT/ES2020/070023**

(87) International publication number:
**WO 2021/144479 (22.07.2021 Gazette 2021/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Freeverse, S.L.**
**08034 Barcelona (ES)**

(72) Inventors:
• **MATEOS SOLE, Antonio**
**08034 Barcelona (ES)**
• **SINISCALCHI, Alessandro**
**08034 Barcelona (ES)**

(74) Representative: **Mohammadian, Dario**
**KUKATI**
**Apartado de Correos 34031**
**08080 Barcelona (ES)**

(54) **SYSTEM AND METHOD FOR THE SECURE PEER-TO-PEER TRANSMISSION OF CONTENT IN DISTRIBUTED LEDGER NETWORKS**

(57) Different aspects of the invention implement an enhanced DLT system, and corresponding method, that allows the peer-to-peer transmission of huge amounts of data packets of content between users, and to be stored in the DLT network, in a secure, trustworthy and efficient manner. By allowing the interface between any type of existing layer 1 DLT network, it does not require the complex, slow, costly and highly risk process involved in the generation of a new layer 1 DLT network. It opens up the range of possible applications of the DLT network to applications in Big Data, IOT, Web 3, MMOG, or any other environment that needs the trust provided by the immutability of data stored in the DLT network.

FIG. 2

**Description**

**TECHNICAL FIELD**

The invention pertains generally to the field of telecommunications and, in particular, relates to a system and method for secure peer-to-peer transmission of content in distributed ledger networks.

**BACKGROUND ART**

Distributed Ledger Networks, hereinafter DLT *"Distributed Ledger Technologies")* networks, allow networks of computers to share an incorruptible and immutable database by storing identical copies of the records in a distributed manner on a large number of computers. They also allow computers to communicate with each other directly, peer-to-peer. Among the various types of such networks, there are those that offer more security, but are slow and expensive. Conversely, those that are faster and cheaper are at the same time the least secure. One type of DLT is blockchain networks, hereinafter blockchain, BC, which store distributed records in the form of a blockchain.

A variety of DLT network platforms exist today, with different configurations, for example, delimiting which types of computers can join the network, and, crucially, which have write privileges. Depending on the use case, a DLT network can be implemented, at one end, publicly and non-permissioned (among which is Ethereum), and at the other end, privately and permissioned (such as those implemented by companies for their internal processes). Public networks are open to inspection by everyone and at the same time are non-permissioned, allowing anyone to join with their electronic device, and operate as just another node within the network. Private networks, on the other hand, only allow certain pre-validated users to access the records distributed on it, and are permissioned, allowing only validated users to participate as nodes in the network.

One such public, non-permissioned network is Ethereum, whose main contribution allows the contents of distributed records to contain not only passive information but additionally program code that acts on input information to generate output information. Each unit of code (or program module) that executes actions automatically like a computer program is called a *"smart contract'.* In other words, Ethereum is a huge computer distributed across thousands of nodes capable of executing countless smart contracts autonomously and automatically. Following the rules stipulated by the program code, instructions are executed that change the state of the algorithm. The distributed records are updated at a certain time to reflect all the same information, that is the result of the computation and the current state within the battery of possible states. Each node maintains a virtual machine in exactly the same state as the other nodes. The update time additionally comprises any sub-processes of verification and correction of irregularities. DLT technology makes it possible to safeguard the integrity of the joint database, in the form of records, by aligning most of the network nodes to behave as dictated by the established protocol.

A node comprises at least one data processing device that can be programmed and that receives input data to execute according to program rules to generate output data while advancing the state in which it is located. Thus, a node may typically be a computer although it may also be any electronic device, such as a cell phone, or a sensor with computational capabilities.

The characteristics of transparency and immutability of public and non-permissioned networks generate maximum trust among all actors in the system, in particular the users who use the network. On the one hand, the content of the blocks and the exchange of information and results stored therein can be verified openly and without hindrance. On the other hand, the program code that manages the platform can be verified, to check whether or not they are in accordance with the rules stipulated therein. For example, you can check whether there is a procedure for detecting and correcting irregularities. In the worst case, such irregularities may be due to malicious actors trying to cheat the network in order to take advantage of it in some way.

In fact, one of the most relevant properties of DLT networks is precisely their ability to detect and eliminate such risks, since they are designed based on the principle of zero trust, that is, they assume that no user of the network trusts any other user while engaging in communications, information exchange, and corresponding actions. Such platforms are designed in such a way that they can operate with some peace of mind despite this distrust because they incorporate processes based on mathematical models, for example, game theory, and incentives, to motivate the various nodes in the network to operate according to the stipulated rules in an honest manner, while promoting cross-checking of all the nodes in the network to ensure that no one is trying to cheat the system.

There are additionally at least two different types of nodes depending on the amount and/or type of information stored in their distributed records. Full nodes store the entire historical record, from the first block to the last one validated by the network. Light nodes require less computational and memory resources, since they do not act on a complete record, but only store the last records, or compressed equivalents of them, or a small part of all records, for example the header. Light nodes have a rather dynamic functionality, allowing them to act on information very quickly, while it is the complete nodes that give DLT networks their property of incorruptibility and immutability.

Due to this development, some DLT networks have been generated based on the same principles, of which Ethereum is just one example, and which the skilled person will be able to recognize by studying the corresponding opensource code. Such DLT networks, public and non-permissioned, which we will call layer 1, or network 1, allow new nodes to recreate the current state of the network by starting their virtual machine and executing each line of code dictated by the shared database until the last one, reproducing the history of events and occurrences, until replicating the current state of the other nodes in the network.

Each node can also arbitrarily send code to a network 1, that is, to the virtual machine composed of all its nodes, which is similar to uploading an application to the shared computer, generating what are known as decentralized applications (DApps). DApps have become extremely popular lately as they inherit the intrinsic advantages of the underlying DLT network, that is, the incorruptibility of the processes, the layer of trust granted to each actor in the system, the fact that the code is unstoppable and runs without interruption automatically, among others.

To prevent malicious attacks on a global computing system of this caliber, a system of economic cost, or micropayments, has been integrated to ensure that only honest users use the system as they are spending their own resources. Some networks require this micropayment when executing an interaction with the DLT network. In the jargon of this technical field each interaction is also known as a transaction, and comprises sending or receiving data, where the data can be program code to update the smart contract or it can be the input or output data related to the smart contract, or any other type of information that is desired to be stored immutably.

The use of the most secure layer 1 DLT networks, to take advantage of their respective benefits, comes at a price, both for the user and for the overall network as a whole. For the user, the more code, the more data, the more interactions with the DLT network, the greater the sum of micropayments to be made. For the whole of layer 1, whose responsibility is to process the code required by all the DApps at the same time, the saturation and/or collapse comes as soon as some of these DApps require a greater amount of aggregate processing than a single computer would be able to handle. Therefore, many DApps have been designed to take advantage of only the most important nuclear advantage of layer 1 DLT networks, which is the trust generated by their immutable and transparent nature when storing information. Such DApps delegate the execution of the rest of the actions, or code necessary to carry out their specific applications to external networks, called layer 2 networks, or network 2.

Layer 2 networks are a collection of computers that make their computational resources available, sometimes, but not necessarily, in exchange for incentives; in other words, sometimes they rent their computational resources and charge for it. At other times, layer 2 computers operate altruistically, to help make the system work, or are simply provided by companies interested in having their own DApps provide the desired functionality. By not exhibiting the properties of high incorruptibility of layer 1 DLT networks, the processing carried out by these networks has to be controlled or monitored, in some way, by the layer 1 network. In one aspect, network 2 comprises one or more computers operating independently in a client-server format. In another aspect, the network 2 is a DLT network. In another aspect, network 2 comprises nodes of a proprietary network that receive no contribution for making their computational resources available.

According to the executing DApp, the program code deployed in the network 1 comprises rules defining one or more crypto-assets (hereinafter, "CAs" or "CAs") representing entities with which users of the DApp perform their actions, interacting with each other. Typically, CAs may be virtual players or virtual objects of the DApp environment. Depending on the nature of the DApp, these CAs may become of value to other users, or they may remain mere virtual representations without value. One of the relevant properties of DApps is the unique nature of the CAs deployed in it. Each CA can be unique, distinguishable from others, and fully traceable, allowing anyone to view its properties, its ownership history, how many have been created, and so on. Since CAs can be exchanged, or bought and sold, in peer-to-peer interactions, between DApp users, those that are generated sparsely are objects of desire.

Existing DApps that allow their CAs to be subject to exchange, barter, or purchase-sell have several disadvantages. First, a common process for peer-to-peer transmission of such CAs between users is auctioning. Auctions in type 1 DLT networks suffer from the same scalability and DLT saturation problems as other DApps. Each transaction of recording information about receiving multiple bids, changing the price of the CA, locking the CA, determining the winner based on the highest bid, unlocking the CA, recording the change of ownership, and so on, involves an interaction with the DLT network. Depending on the case, there may be thousands of interactions with the DLT network to complete the process of auctioning a single CA. Based on the current state of DLT technology, a DApp with multiple CAs cannot operate in such a way as to allow the transmission of multiple CAs through a global auction. It is even feasible for the DLT network to collapse as it cannot process such a number of transactions. This is a problem not only for the DApp, which, being inoperative, ceases to arouse interest and its users abandon its use, but also for the underlying DLT network, which has serious scalability problems when it comes to serving as a technological platform for running applications of general interest. In other words, the adoption of this new technology by the large mass of users is slowed down.

The scalability problem is worsened by the additional cost problem. The cost of running DApps on network 1 is proportional to the computational load and number of transactions required to run it. In the case of the Ethereum network, these costs are called *gas*, or *gas rate.* Each transaction or interaction, such as a write action, or an arithmetic action, has a cost assigned to it in terms of gas. Regardless of who pays this cost, whether it is the DApp users or the DApp managers, the cumulative costs increase the overall costs beyond what is, in practice, feasible.

Another major drawback, at this early stage of implementation of the new DLT technology, is the use of its crypto-currency, which often seems difficult and complicated to the uninformed user. Each type 1 network has at least one cryptocurrency native to the network, which are data packets representing a value, and which can be used to make payments in the global environment of network 1. In the case of Ethereum, the native cryptocurrency is called Ether, and can be used to make payments not only on a particular Ethereum DApp, but on any DApp running on the Ethereum type 1 network platform. As of today, cryptocurrencies have their complications for the uninformed user as they need a particular configuration of the electronic device involving the establishment of an electronic wallet and the understanding of basic cryptography concepts, such as asymmetric cryptography, public, secret and seed keys. In addition, the first installation requires activating a profile with a financial institution, such as a bank, disclosing a number of personal details, passing certain user profile tests, making a fiat money transfer to the institution, and waiting, sometimes days, until receiving an amount of cryptocurrencies in return. During this time, given the high volatility in today's cryptocurrency markets, the value in fiat money paid may fluctuate in such a way that it may not match the payment in cryptocurrency required for the transaction desired by the user. That is, at the end of a payment action, the money is worth less than at the beginning of the payment action.

For a new application, the typical uninformed user expects, in a matter of a few minutes, to download the application, carry out some actions, and in case of needing to carry out some payment, to do so also immediately, possibly by credit card, or for further uses of the same application, by setting up a preferred payment method, for example, by bank transfer. While this is no problem for the informed user who comfortably manages his e-wallet and has cryptocurrencies native to the DApp in question, it is a complete impediment to the adoption of DLT technology and its applications for other uninformed users.

Some solutions rely on the full involvement of the DApp Manager (or "DM"). The DM takes control over the entire operation to be responsible for monitoring the security of the process, and to ensure that, on the one hand, he has received the secret keys of the CA being auctioned, and, on the other hand, has received payment from the buyer, before completing the transfer of the CA from one owner to another. This apparent security measure is in fact one of the most serious errors in this type of operations on DLT platforms. The owner of the CA, by handing over his secret CA key to the DM, completely loses control over it, and in effect, has given away his CA to another actor in the DLT network. This poses a risk that hinders the adoption of this new technology. Moreover, if there are two malicious actors in cahoots, the loss is definite. As an example, there may be a buyer who proves that he has made a payment in native cryptocurrencies to the DM, and the DM completes the transmission of the CA to the buyer accordingly. The seller of the CA will have a really hard time trying to reverse the transaction, even if he can prove that he has not received any payment from the DM.

An additional problem is the limitation of current processes to allow simultaneous marketing of the same single CA to distinct and unconnected groups of users, for example in markets in China, Japan, Europe and the United States, simultaneously. It is possible for a malicious seller to attempt to sell its single CA to more than one buyer through disjoint and closed user groups. In this case, a legitimate buyer from a first group may have already made payment only to find that the CA is no longer available, or has changed ownership by also transferring to another buyer from a second group, leading to adoption problems at best. In the worst case, the malicious DM can illicitly profit from this operation by selling his CA to more than one buyer (also known as *double-spending*).

Therefore, it is desirable to provide a solution to all, or part, of these problems regarding the transmission of CAs in DLT environments.

**SUMMARY OF THE INVENTION**

It is an object of the invention to provide solutions to all, or part of, the above problems. In particular, it is an object of the invention to provide a system, and corresponding method, of enhanced DLT that enables transmission of content in an optimized manner. In other words, it is desired to provide a DLT system that can carry out multiple transmissions of CAs between users of multiple unconnected groups by a process capable of involving a potentially huge number of interactions between users (for example, by auction) in a reliable, secure, and efficient manner; in a manner that does not require either sellers or buyers to have to acquire cryptocurrency; and in a manner that the CA can be marketed in several different marketplaces simultaneously.

By enabling the interface between any type of existing layer 1 DLT network, it does not require the complex, time-consuming, costly and highly risky process involved in the generation of a new layer 1 DLT network. This opens the range of possible applications of the DLT network to an infinite number according to the needs of society, covering much more than carrying out DLT payments, for example, applications in Big Data, IOT, Web 3, MMOG, or any other environment that needs the confidence provided by the immutability of data stored in the DLT network. The reliable, secure, and efficient transmission of content between different users will enable the adoption of DLT technology in all these environments.

It is therefore an object of the invention to provide an enhanced DLT system for peer-to-peer transmission of digital content.

It is another object of the invention to provide a method of peer-to-peer transmission of content in an enhanced DLT system.

It is another object of the invention to provide a digital locker in an enhanced DLT system for peer-to-peer transmission of content.

It is another object of the invention to provide a method in a digital locker of peer-to-peer transmission of content in an enhanced DLT system.

It is another object of the invention to provide a digital validator in an enhanced DLT system for peer-to-peer transmission of content.

It is another object of the invention to provide a method in a digital validator of peer-to-peer transmission of content in an enhanced DLT system.

It is another object of the invention to provide a computer program comprising instructions which, once executed on a processor, carry out the steps of a method of peer-to-peer transmission of content in an enhanced DLT system.

It is another object of the invention to provide a computer readable medium comprising instructions which, once executed on a processor, carry out the steps of peer-to-peer transmission of content in an enhanced DLT system.

The invention provides methods and devices that implement various aspects, embodiments, and features of the invention, and are implemented by various means. The various means may comprise, for example, hardware, software, firmware, or a combination thereof, and any one, or combination of, the various means may implement these techniques.

For a hardware implementation, the various means may comprise processing units implemented on one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform described functions, or a combination thereof.

For a software implementation, the various means may comprise modules (for example, processes, functions, and so forth) that perform the described functions. The software code may be stored in a memory unit and executed by a processor. The memory unit may be implemented within the processor or external to the processor.

Various aspects, configurations, and embodiments of the invention are described. In particular, the invention provides methods, apparatuses, systems, processors, program code, computer readable media, and other apparatuses and elements that implement various aspects, configurations, and features of the invention, such as described in the following.

## BRIEF DESCRIPTION OF THE DRAWINGS

The features and advantages of the present invention will become more apparent from the detailed description which follows in conjunction with the drawings, in which like reference characters identify corresponding elements in different drawings. Corresponding elements may also be referenced by different characters.

**FIG. 1** shows the deployment of the enhanced DLT system for secure peer-to-peer transmission of content.
**FIG. 2** shows the enhanced DLT system for secure peer-to-peer transmission of content according to one embodiment of the invention.
**FIG. 3** shows program modules deployed in each network according to one aspect of the invention.
**FIG. 4** shows the structure of a content packet of the DLT environment according to various aspects of the invention.
**FIG. 5** relates to a procedure for secure peer-to-peer transmission of content in an enhanced DLT system according to an embodiment of the invention.
**FIG. 6** refers to a method of deployment of the enhanced DLT system.

## DETAILED DESCRIPTION OF THE INVENTION

This invention is deployed in any layer 1 network that is a programmable distributed ledger system. As of today, Ethereum, TRON, EOS, or XDai, represent such a system, which, moreover, is based on blockchain technology, or simply blockchain. However, the teachings of the invention apply to any programmable DLT environment, that is, any distributed system of records that stores not only data, but also programmable code, enabling the deployment and execution of smart contracts (as a whole forming a DApp). Such programmable DLT environments comprise at least one virtual machine and at least one distributed record. The distributed records store, in part, the rules of the algorithm to be executed. Based on input data, the virtual machine acts on the information, either received or stored in the distributed records, in correspondence with the defined rules, to advance the state of the algorithm and generate output data, which may also be stored in the distributed fs.

This generic environment can be programmed by deploying particular software to run a required decentralized application, or DApp. Once the DApp program code is deployed, the portion of the DLT network executing the DApp may be represented as at least one DApp processor and at least one DApp memory. That is, the DApp processor, or processing means, represents the part of the DLT virtual machine that processes information for that particular DApp, and the DApp memory, or storage means, represents the part of the DLT network allocated to executing and storing data to perform the required DApp. In the remainder of the description, any reference to "*processor*" refers to the DApp processor, and any reference to *"memory"* refers to the DApp memory. Further, any reference to the distributed ledger network, first network, layer 1 network, network 1, Ethereum, EOS, BC, or blockchain, or simply *"DLT',* refers to the programmable DLT network.

The term *"content* will be used in the context of this invention to refer to crypto-assets, CA, generated in the environment of DLT platforms. Crypto-assets are virtual representations of value and/or utility. They are also known as tokens, avatars, digital twins, electronic stickers, virtual players, and so on. We use the term content to encompass all these variants of virtual representations transmissible between owners since, technologically, they are data packets containing content, such as audio, video, image, multimedia, metadata, and other information, such as parameters and properties, a mixture of these, or a compressed description of these.

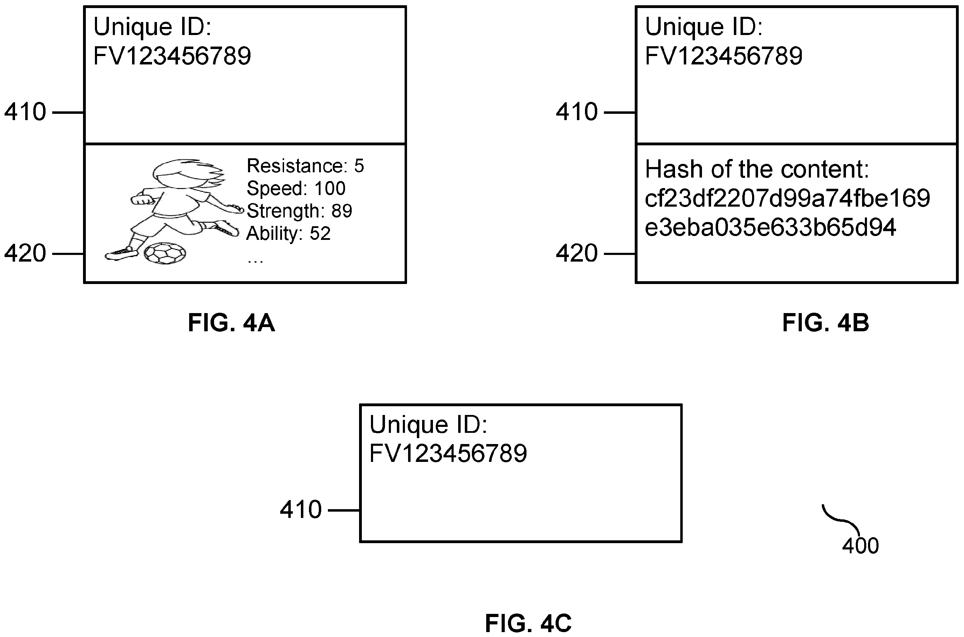

**FIG. 4** shows different embodiments of such a digital content by way of example. In **FIG. 4A,** the data packet 400 carrying the content comprises a header section 410 and a payload section 420. The header section comprises at least the unique identifier of the content and other ownership data, as well as different parameters common to the blocks in the blockchain. The upload section comprises the data necessary to define the content, in this case visually represented as a soccer player, along with other properties of the virtual player. In this aspect all the information explicitly referring to the digital content is stored directly in the DLT.

In another aspect of **FIG. 4B,** instead of storing the entire data packet in the DLT, not all of the information regarding the digital content is stored, but a compressed representation of the digital content is stored, saving space and cost. In this aspect, the complete data defining the CA is stored on a local network, for example stored off-chain, or on another network, such as IPFS, or simply on some other computers. Identifying data can be generated in multiple ways. In one implementation, they are obtained by applying a mathematical function known as a hash, H, to the data in the content section.

$$id = H(content), \qquad [\text{expression 1}]$$

where the hash function can be chosen among several alternatives available in the literature (SHA2, SHA3, MD5, and so on); in this implementation, the properties of the hash functions ensure that no two data packets with different contents with different identifiers can exist. In other words, two data packets with identical contents will also have identical identifiers. In this aspect, while the header 410 comprises the same unique identifier of the data packet, the payload section 420 comprises only the hash of the digital content.

In another implementation, a DApp installed in the DLT network is responsible for creating a unique identifying number each time a crypto-asset is created, for example, by simply assigning consecutive integers. In the aspect of **FIG. 4C,** no information related to the content data itself is stored, but, only the identifying data 410, saving further space and cost. In this aspect, the content data is not stored in any physical or even local memory of the DM, but is generated on the fly by code. For example, the code of a DApp can be programmed to generate this data by an algorithm when required. A DApp may be configured so that, when it receives a request to provide data on CAs indexed from 0 to 1000, it generates random images, with seed equal to the required index, and declares its owner to be the DApp manager. Thus, regardless of whether *"the CA data"* is explicitly stored in memory or whether all or part of it is generated on the fly programmatically, it is referred to as *"the data in the data packet'.*

By way of example of this aspect, if a user is interested in acquiring a virtual player, and requests from the network 1 to read the properties of the virtual player, just by identifying the virtual player using its unique identifier FV123456789, the DApp, by means of the corresponding smart contract, regenerates the properties that correspond to this particular player and returns them to the requester of the information.

The header section of the data packet, regardless of whether the data packet information is stored in the same DLT network, or is dynamically generated each time it is referenced, comprises at least one section with data identifying the same (packet ID), a section with data on the current ownership of the packet (holder), together with its particulars, and a section comprising data defining the data related to the contents of the CA, together with its particulars. In addition to being either explicitly written in memory or generated programmatically, these sections may be located in different DApps of the DLT. **Table I** shows the different types of information stored in the layer 1 DLT network:

TABLE I

| ID packet: FVP9999999 | | | |
|---|---|---|---|
| **Holder** | | **CA** | |
| **User ID** | FVU169e3eba03 | **ID CA** | FVCA123456789 |
| **Geographic Zone** | Europe, Asia | **Geographic Zone** | Only Europe |
| **Minimum Ether** | 77777777 | **Locked/ Unlocked** | LOCKED |
| **Multi-signature** | NO | | |
| [more conditions] | [.......] | [more conditions] | [.......] |
| [more restrictions] | [.......] | [more restrictions] | [.......] |

The ownership data specifies which data, and which inputs I must be provided to the DLT so that certain actions on the data packet can be executed; thus, the DLT network verifies that a certain number of conditions $C_i$ applied on the inputs, return 1 (in binary, *correct*):

$$C_i\,(I, state)\; =\; 1,\; \forall i \qquad \text{[expression 2]}.$$

These conditions may depend on the current state of the DLT or DApp (represented by state), for example, the hour and minute.

In one embodiment, the ownership data comprises a public key, *pk,* of a secret key/public key pair, (*sk, pk*); so that the inputs I to be provided are a message **M,** together with its digital signature *F(M)*, signed with the secret key, sk, for the data packet to be modified by a DApp. In this case, one of the conditions verified by the DLT network is that a particular message *M* was signed by the *pk* corresponding to *sk:*

$$if\; extractPublicKey(M, F(M))\; ==\; pk\colon return\, 1;\; else\colon return\, 0$$

$$\text{[expression 3]}.$$

The functions F(), and extractPublicKey() depend on the digital signature scheme used, for which you can choose among several state-of-the-art asymmetric encryption methods, such as Ellyptic Curve Cryptography, RSA, among others.

In one aspect, the conditions include other checks, not directly related to the owner of the CA, but to the state of the DLT or the DApp. For example, if the data packet represents a soccer player in a soccer game, only the person with the knowledge of the secret key corresponding to this player can line him up in a match.

In another aspect, the ownership conditions may require the provision of several valid digital signatures, thus representing shared ownership via multisignature wallets. In that case, actions on that CA will only be processed if all required digital signatures are provided.

The content data may be explicit in the DLT, or compressed by various methods. For example, if the data packet represents an image, the image may be part of the data packet according to a standard image file format,

$$content\; =\; image \qquad \text{[expression 4]}$$

or only its hash may be present

$$content\; =\; H(image) \qquad \text{[expression 5]}.$$

In the latter case, it is not possible to obtain the DLT network image, but if such an image is available, it is possible to verify that the data packet represents precisely that image, simply by calculating the hash, and comparing it with the hash of the data packet. Note that the transfer of ownership of the CA, and therefore, in effect, the transmission of the digital content, usually involves only the modification of the ownership section of the data packet, for example, modifying the *pk* of one user to the *pk* of another.

Ownership of this data packet may be transmitted over communication channels in a number of ways. In the DLT environment, peer-to-peer transmission of ownership can also be effected directly from a first user to a second user through the use of the unique identifier and, typically but not in all respects, the digital signature authorizing the transfer by the seller. To operate in the DLT network environment, users need at least one electronic wallet, responsible for generating one or more peers (*pk, sk*), for keeping the sk secret, and for digitally signing messages with the *sk*. The user's unique identifier is usually directly the *pk* or, values derivable from the *pk*. For example, to operate in the Ethereum network, the user's identifier, called Ethereum Address, is obtained by applying the SHA-3 function to *pk*, and retaining the first 160 bits.

This identifier also serves as an electronic address. Thus, a transmitter can perform a peer-to-peer transmission of a data packet directly to another user as long as it knows the identifier of the data packet to be transmitted, has the necessary inputs / to verify the conditions $C_i$ under which it can modify the ownership section of the packet, and the receiver's identifier. Similarly, a smart contract can perform a peer-to-peer transmission of a data packet directly between two users as long as it receives the identifier of the data packet to be transmitted, the identifier of the transmitter, the conditions under which it can modify the ownership section of the packet, and the identifier of the receiver.

Unlike the transmission of any data packet in non-DLT communication networks, in which a copy of the content is actually transmitted from the transmitter to the receiver, in the DLT environment the transmission of ownership of the content is effected by transferring the unique identifier from one user to another. In other words, since no two users can have content with the same unique identifier, the transmission faithfully replicates the reality of the non-virtual world, that is, when making a gift, the transmitting user is left without the gift since he has modified ownership at the end of the transaction. In the DLT network environment, when making a transmission, the transmitter is left without the possibility of performing any action on the content, since he has transmitted it to the receiver. In other words, the digital content is transmitted from one user to another only once, without *double-spending*.

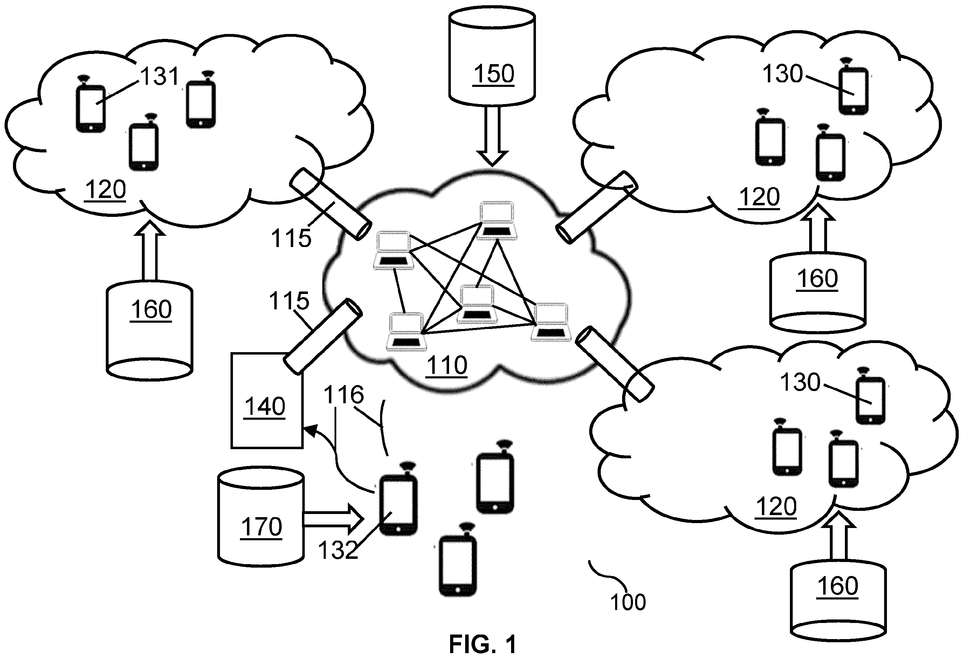

**FIG. 1** shows an enhanced DLT system for secure peer-to-peer transmission of content according to an embodiment of the invention. The system 100 comprises at least two computer networks communicating via a communications network 115, for example, the Internet. The first network 110 is a layer 1 type network, such as, for example, Ethereum. The second network 120 is a layer 2 type network, such as, for example, a network of electronic devices 130 of users belonging to a group of users interacting with each other. The basic configuration comprises a first network 110 and one or more second networks 120. In the case of a plurality of second networks, the second networks represent closed, unconnected groups of users, not necessarily having knowledge about each other. In one aspect, the system comprises at least one electronic device 132 that does not belong to any user group.

The users' electronic devices first communicate with the DApp manager, or digital validation means 140, to download a DApp Interface (I-DAPP); once installed, it can be used to communicate with the DApp on the network 1 either directly or via the validation means which also acts as a gateway (direct and indirect communication with the first network is indicated by the two arrows 116). In another implementation, the I-DAPP is provided as a web interface in a browser, so that it does not require the installation process. The term digital validator is used interchangeably to refer to digital validation means.

At an initial stage, the digital validation means 140 are configured to deploy a first DApp module 150 of programmed code to the network 1 and a second module 160 of programmed code to each network 2, to establish the code modules to be executed and the communications protocol to perform peer-to-peer transmission of content. The digital validation means 140 are also configured to, at any time, send the I-DAPP application 170 to be installed on any electronic user device (130, 131, 132), or serve the I-DAPPs via web browser, without the need for installation.

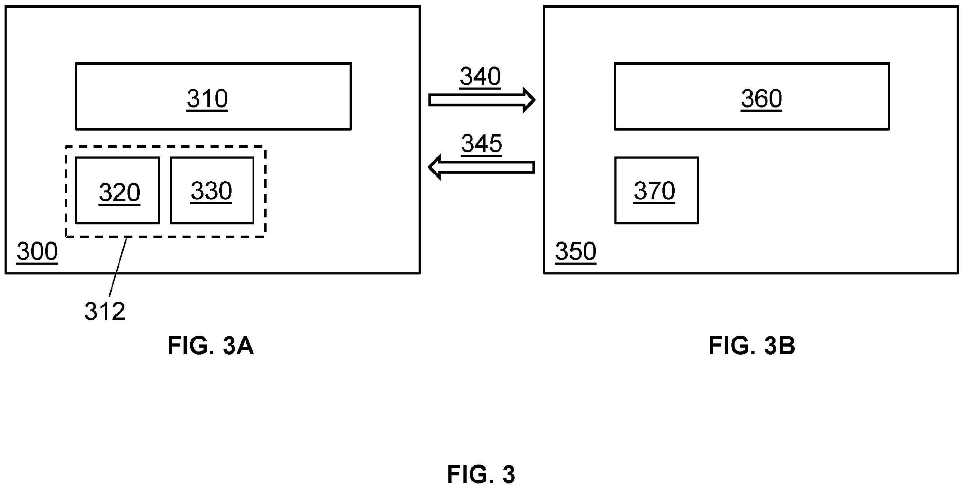

**FIG. 3** shows program modules deployed in each network. **FIG. 3A** shows the first program code module 300 deployed in network 1, comprising at least one memory 310, or storage means, and a processor 312, or processing means. The processor comprises at least one digital updater 320 and at least one digital locker 330. The memory is configured to store at least the state of the plurality of contents belonging to users of the DApp, which is relevant to the operation, for example, comprising at least the ownership sections of the data packets thereof. In one aspect, the memory stores a table of correspondences between the identifier of each content of the DApp and the corresponding ownership sections, such as, for example, depicted in Table I.

In another aspect, the memory stores use restriction data (or conditions) for each content. For example, transmission of content between users may be restricted according to different parameters, for example, time, or geographic area, and so forth, as for example, depicted in Table I. One of the actions to be restricted is precisely the modification of the ownership of a particular content. In one implementation, the mapping table comprises a field indicating whether the content is FREE (or UNLOCKED) to be transmitted or is LOCKED, and therefore cannot be freely transmitted. Both the locker and the updater act as a link to and for actions performed by off-chain users, that is, without interacting with the layer 1 DLT network. They are the only modules with write permission on ownership aspects of the DApp CAs. In another implementation, the ownership table may not contain any field referring to freedom of transmission, so that this absence is interpreted as UNLOCKED; this can be used to save memory space.

In another implementation, the unique identifier, as well as its transmission freedom property, of one or multiple CAs are not written in memory, but are provided via program code. For example, the program may be configured to respond that all crypto-assets with identifier less than 1000 that have been created at a certain time are all assigned transmission state UNLOCKED; when the code is executed to learn the existence and transmission state of such crypto-assets, the code first looks to see if it is explicitly recorded in memory; if not, it returns that it exists, and that it is free to be transmitted.

Each locker, or digital locking means, is configured to receive a LOCK message, as well as a series of $I^{cong}$, inputs, verify a series of $C_i^{cong}$ conditions, on these inputs,

$$C_i^{cong}(I^{cong}, state) \; = \; 1, \forall i$$

[expression 6]

and, in case of successful verification, automatically perform the required action by modifying the state of the field corresponding to the content in question from UNLOCKED to LOCKED. The term digital locker is used interchangeably to refer to digital means of locking.

Each digital updater, or digital update means, is configured to receive a CONFIRM or CANCEL message, as well as a series of $I^{act}$ inputs, verify a series of $C_i^{act}$ conditions, on these inputs,

$$C_i^{act}(I^{act}, state) \; = \; 1, \forall i \qquad \text{[expression 7]}$$

and, in case of successful verification, automatically perform the required action. In case of a CONFIRM message, the updater proceeds to replace, in the field corresponding to the content in question ("Holder" -> "User ID"), the new holder by the previous one, deleting the public key *pk* (or the chosen identifier) of the old holder by the public key *pk* (or the chosen identifier) of the new holder. In case of a CANCEL message, the updater proceeds to cancel the CA transmission and interact with the locker to revert the restriction state for the content in question from LOCKED to UNLOCKED state. In this case the ownership of the digital content is not changed. In another aspect the updater is configured to revert the restriction state directly without interaction with the locker.

In one aspect, the entries $I^{cong}, I^{act}$ comprise digital signatures of the aforementioned messages, the signatures being obtained via the secret keys *sk* corresponding to the public keys *pk* referenced in the ownership section of the data packets, or in lists of authorized public keys stored in memory. In this aspect, part of the conditions are requirements that these public keys match the keys stored in the ownership section $pk_{owner}$:

$$pk \; = \; extractPublicKey(M, F(M)) \; ,$$

$$if \; pk \; == pk_{owner} : \; return \; 1; \; else: return \; 0 \qquad \text{[expression 8]}.$$

In the case where user identifiers are identifiers derivable from public keys, such as Ethereum Addresses (EA), this condition is verified if:

$$pk \; = \; extractPublicKey(M, F(M)), \; EA(pk) \; == \; EA(pk_{owner}) \; ? \; \text{[expression 9]}.$$

**FIG. 3B** shows the second program code module 350 deployed in each network 2, comprising at least one digital router 360 and at least one digital authorizer 370. To facilitate connection by any user to the pool of routers, each is assigned a public IP address. Using the deployed program modules, the network 2 reads 340 the necessary data from the network 1, and once the corresponding actions have been carried out, sends write messages 345 to the network 1.

As network 1 is a DLT network, any corresponding program code, means or modules exist in multiple copies, one copy for each complete node, as each node runs a processor within the DLT environment. Although, in one respect, network 2 is not a DLT network, in the same way, each node has installed the program code it receives during the deployment phase. In this description, the means or program modules are referred to singularly (for example, *locker*), although the layperson will understand that they are actually installed and deployed in multiple copies distributed across both network 1 and network 2 (that is, *locker* actually refers to *each locker installed on each node*). Unless in some aspect the advantages of implementing the invention on really a single node are explicitly highlighted, the description in general assumes that communications are carried out in the distributed environment described.

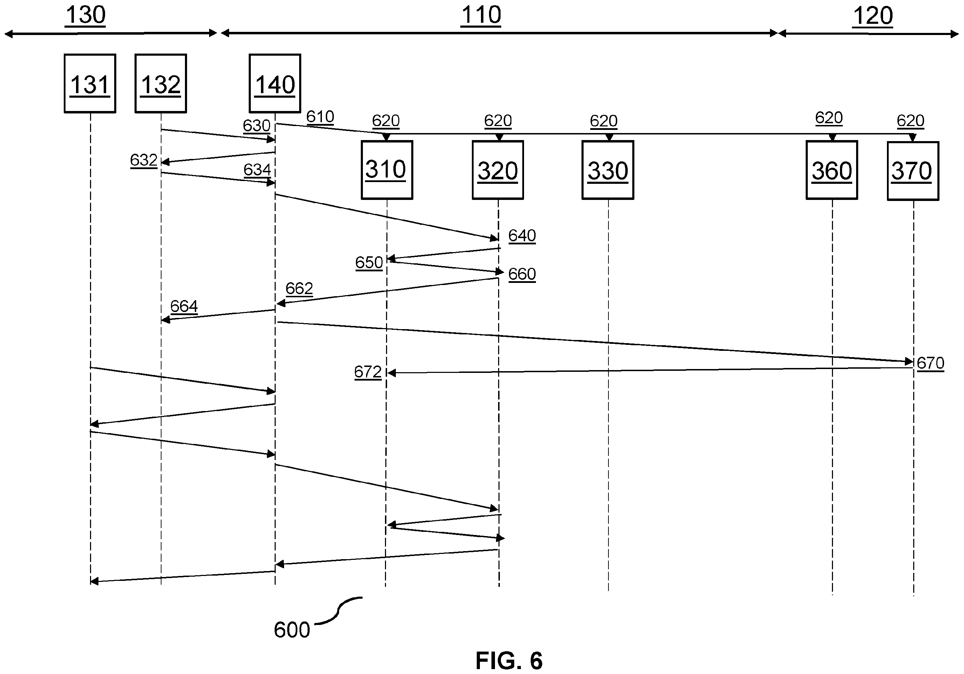

**FIG. 6** relates to a deployment method of an enhanced DLT system according to an embodiment of the invention. In a first stage, the digital validation means 140 communicate 610 with the network virtual machine 1 to deploy 620, on the one hand, the memory 310, the updater 320, and the locker 330, in the first network 110. On the other hand, the digital validation means 140 communicate with the set of nodes of the network 2 to deploy 620 the routers 360, and the authorizer 370, in the second network 120. In one aspect, upon receiving 630, by a user node 132, of a request to install the I-DApp, the digital validation means 140 send 632 to the user the program code necessary to install the user interface on their electronic device, or access it via, for example, a web browser. Once installed or accessed, the user node 132 communicates 634 to the digital validation means 140 with the user data.

In turn, the digital validation means 140 communicates 640 with the updater, notifying the updater of the activation of the new user. The update comprises storing 650 the data in the distributed records of the first network. Upon completion of the update, the updater reads 660 the current data and state of the first network, and notifies 662 the digital validation means 140 that the activation of the new user has been completed, which triggers the digital validation means 140 to notify 664 of its successful activation to the user node 132. The user activation steps are repeated each time a user joins the DApp (the following unnumbered arrows refer to this possibility). Moreover, the digital validation means 140 assigns the authorizer node 370 and communicates 670 with the updater, notifying it of the activation of the authorizer node, which in turn, is recorded 672 in the memory 310 of the DLT.

In another aspect, the activation step is not necessary; for this purpose, the DApp code is configured to not require prior identification of a potential user. This is useful to avoid interaction with the DLT network and unnecessary use of its memory. An example of use is when a buyer wants to purchase a CA. If the seller, who has been recorded in the DApp at the time of assigning a CA, decides to transfer his CA to a buyer with a previously unrecorded identifier, the DApp can record at the time of purchase the buyer's identifier in the ownership section of the data packet; indirectly, this step 'records' the buyer in the system.

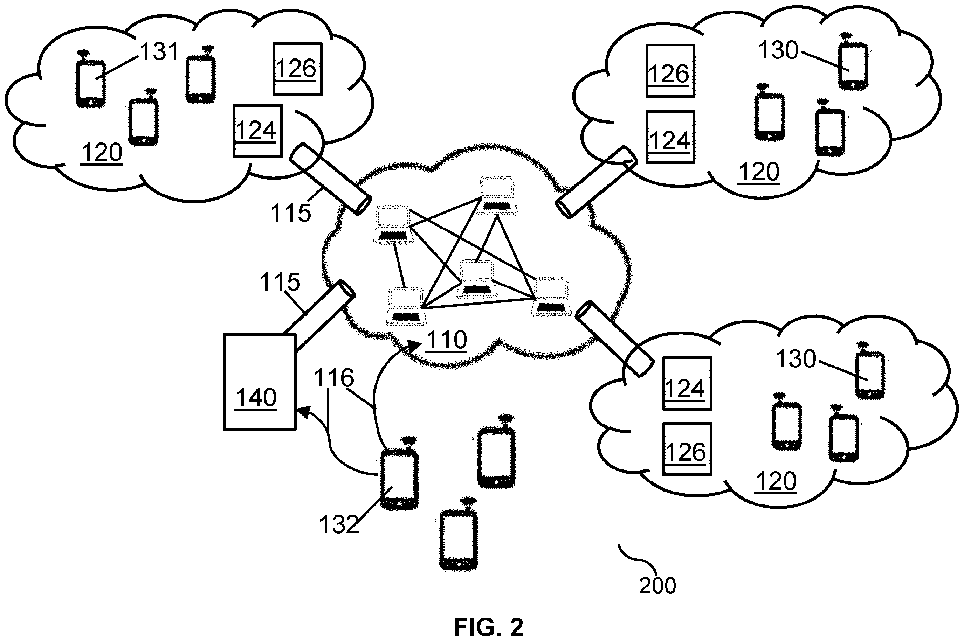

**FIG. 2** shows the enhanced DLT system for secure peer-to-peer transmission of content once the program modules have been installed. After the initial deployment phase, the DLT system comprises at least one second network 120. The second network comprises at least one router node 124 and at least one authorizer node 126. The router node or authorizing node function may be assigned to another node that is not necessarily an electronic device of a DApp user, as it could be a specific node with network management functions. Both services can also coincide in the same node. The authorizing node is pre-validated before recording it in the first network during deployment, along with its credentials, for example, public keys, allowing to verify the legitimacy of any message or interaction, through the corresponding programmed means automatically.

The digital router, or digital routing means, continuously checks the state of the content generated and used in the DApp by reading operations of the storage means 310 of the first network 110, and propagate this information to all devices of their respective second networks 120. They also propagate information about the actions of users in their network 120 that do not necessarily have to go through the first network 110. In particular, the routers receive CAs offer messages from a transmitting user via their I-DApp and broadcast the messages to all users in their network, as well as wish-to-purchase messages.

The digital authorizer, or digital means of authorization, monitors the interactions between users of the same group in their respective second network 120, in order to perform write share operations on the first network 110. This assignment is made effective by writing to the authorizer section in the DApp memory. In one embodiment, the authorizer's public key *pk* (or a derivable value thereof) is written to this section, so that only authorizer requests that come digitally signed by secret keys *sk* corresponding to such public keys *pk* are accepted.

In one aspect, the authorizer and the validator are the only ones configured to send write actions on the first network 110. In a preferred aspect, it is the digital validator that manages interactions with the program modules of the first network, although in other aspects it may also be the digital authorizers of the second networks, or an authorizer node of a particular second network acting on behalf of all digital authorizers and even the validator. In the following, the validator is referred to as the entity in charge of carrying out all actions, although it could also be any authorizer that has access to the necessary information to act as a validator. An example of necessary information is the ability to receive second M2 messages from the devices that send them, either directly or by routing.

The write actions comprise LOCK, CONFIRM, or CANCEL. The digital validator is configured to send a write action to the first network 110 of LOCK, locking, via the first network locker, the content from being transmitted to other users until the operation is confirmed or cancelled. In an optional aspect, in this LOCK action a copy of the message offering content is stored in the memory of the first network. Upon deciding which user will receive the content data packet, the digital validator is configured to send a write action to the first network 110 of CONFIRM, completing the transmission of the data packet from the transmitting user to the receiving user. If the operation is unsuccessful, the digital validator is configured to send a write action to the first network 110 to CANCEL, discontinuing the process and unlocking the data packet.

The locking action may be triggered at different times. The transmitting user starts the process by sending a first message M1 offering a content. Any other candidate user shows interest in taking over the content by sending a second M2 message of acceptance conditional on a value. Multiple candidate users and multiple second M2 messages are expected, in particular since the responses of candidate users can be updated by sending more M2 messages to replace the previous ones. In one aspect, when a transmitting user sends a first message M1 offering a content, the validator proceeds to interact with the locker to lock the content data packet upon receiving of this message. This aspect has the disadvantage that it does not allow to act on the data packet while it is locked. In addition, there may be thousands of such records in the first network that never end up in a completed transmission, wasting the computational resources of the first network. In another aspect, when a transmitting user sends a first message M1 offering a content, the validator proceeds to interact with the locker to lock the content data packet upon receiving of the first of the second messages M2. In this case, the data packet is only locked when there is an M1-M2 message pair, ensuring that at a minimum the transmission process of the content data packet will be completed. Consequently, computational resources are not wasted since the first network is not interacted with every time a user wants to offer the transmission of a data packet. At the same time, the number of interactions with the first network is minimized since there is only one locking interaction when there is a candidate receiver of the data packet. The rest of the description details the operation of this second advantageous aspect.

Once an operation is confirmed, that is, when there is an final candidate user who will be the receiving user of the data packet, the digital validator sends a CONFIRM write action, which instructs the DApp smart contract, via the first network updater, to carry out the transmission of the content from the transmitting node to the receiving node, re-assigning the content from its previous owner to its new owner, in the manner described above. Conversely, it is also possible to cancel the operation, in which case, the digital validator sends a CANCEL write action, which instructs the DApp smart contract, via the first network updater, to unlock the content and abort the transmission algorithm. The content is preferably unlocked through interaction with the locker.

In a further implementation, the first network locker is configured (or programmed) to also react upon receiving messages from any user not previously pre-validated. In this aspect, the receiving of the M1-M2 pair (first message M1 and second message M2) triggers the corresponding locking action by a user not previously identified or recorded by the digital validation means 140. This aspect only allows for a non-pre-validated user to trigger the locking action, however, it will always be necessary for the digital validation means 140 to perform the final action of confirming the transmission of the content data packet from the transmitting user to the receiving user.

The digital jammer is configured to identify the source of the messages it receives. In the case where it is the validator that triggers the locking action, only the validator is required to provide the first M1 message to proceed with the locking. On the other hand, in the case where an unknown user triggers the locking action, the user is required to provide both the first message M1 and the second message M2 to proceed with the locking.

In one aspect, to solidify the security of the system, the first network processor (either the updater or the locker) is programmed to require, in addition to the digital signature of the validator or authorizer, additional input data $I^{cong}$, $I^{act}$ demonstrating that the intention to offer/accept the content was explicitly effected by the corresponding users. In one aspect, this requires that each action by these users must be accompanied by a digital signature, using the secret corresponding to the public key associated with the user. Therefore, the updater must temporarily store both the action coming from each user and its digital signature. Thus, when it finally sends the LOCK or CONFIRM message, it must also provide the corresponding actions and digital signatures.

Generally speaking, as mentioned above, the DApp (either the updater or the locker) is programmed to perform a set of checks, of which the ownership checks are a subset, the latter may include requirements related to the state of the DApp. For example, it may be required that a certain amount of time has passed since the last purchase by the same buyer, or that the buyer is not on a blacklist of excluded identifiers for previous misbehavior, and so on.

In one aspect, the digital validator is configured to send a CANCEL write action. This action may be performed in at least one of the following cases: that payment for the data packet has not been produced by the buyer for a required time; that the conditions applied by the updater module to accept a CONFIRM order are not successfully verified. Upon sending the CANCEL action, the DApp (either the updater or the locker), after verifying the digital signature of the validator or authorizer, enforces the CANCEL action, which releases and unlocks the content allowing its owner to perform other transmission actions freely.

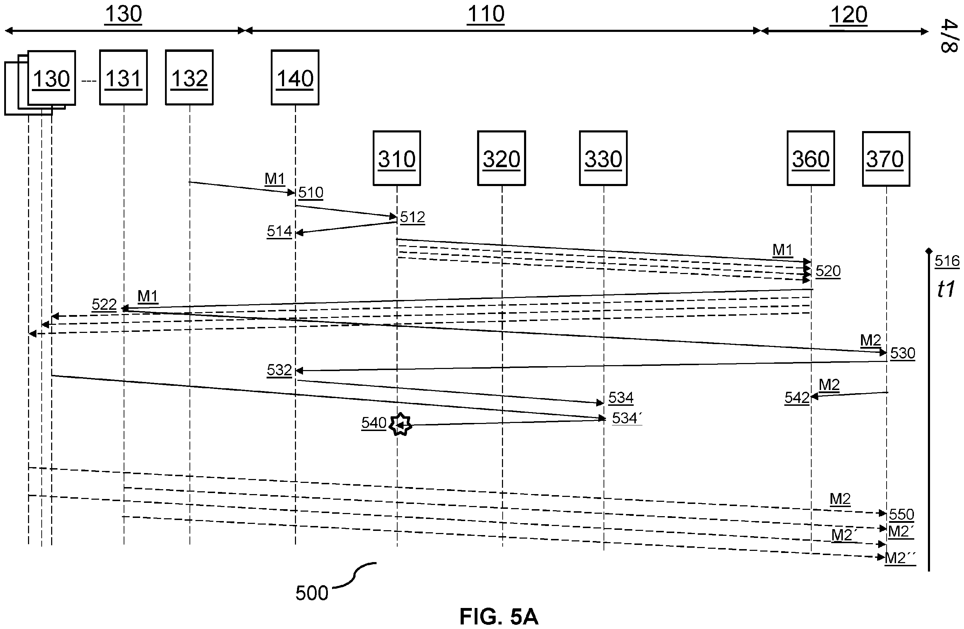

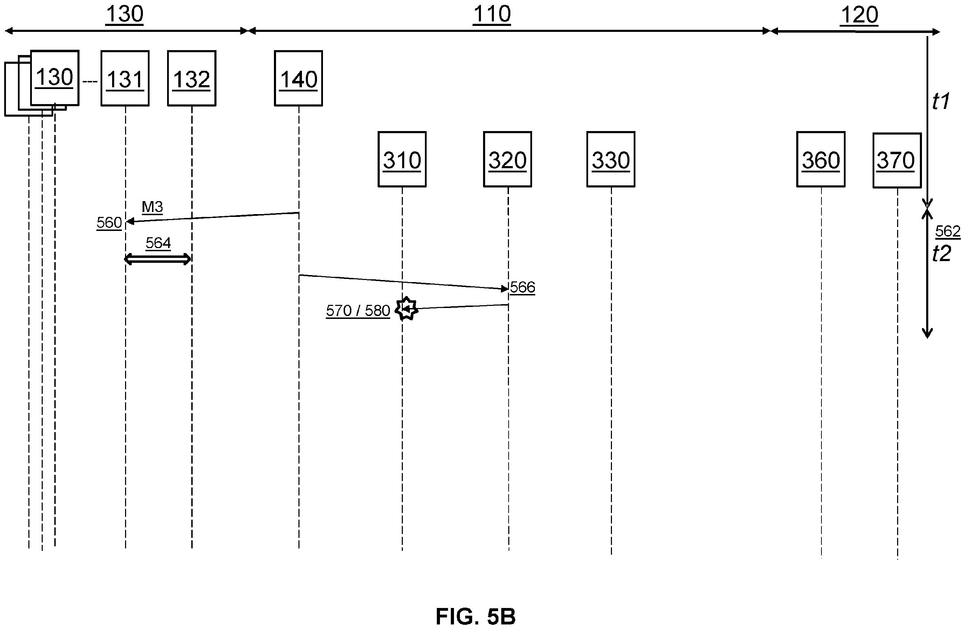

FIG. 5 shows a method 500 in an enhanced DLT system for secure peer-to-peer transmission of content according to another embodiment of the invention. The method is depicted sequentially by two drawings, FIG. 5A and 5B. Beginning in FIG. 5A, through the use of the I-DAPP and its electronic device 130, any transmitting user may offer, for transmission to another device, transmission of a DApp content. This action is performed by the sending 510 of a first message M1 from the transmitting device, in this case device 132, to the digital validation means 140. The first message M1 comprises identifying data of the content to be transmitted, as well as data of the transmitting node. In one aspect, it also includes other data qualifying its intent, for example, a minimum price and a limited time period during which its transmission offer is valid.

In one aspect, the first message M1 has the same configuration regardless of the user device receiving it. In another aspect, a plurality of first messages (M1, M1', M1", ...) are generated, each differentially configured, so that only devices that meet the configured conditions or constraints can act on the first message. By way of example, the price can be varied, the offer time can be varied, the geographical area can be defined, or any other information contained in the message. For example, a first message may be configured with a value offer directed to a particular second network according to its geographic area and with another value offer directed to another second network according to its other geographic area. In yet another aspect, some second networks may be completely excluded from acting on the first message, preventing the content data packet from being transmitted to a particular subset of second networks.

One of the restrictions on the use of this method by anyone is that all communications, or messages in this case, must be digitally signed with the secret key of the corresponding user. Before any action is taken, the processor (either the updater or the locker) verifies that the message matches the key that signed it, and proceeds to validate the legitimacy of the signing user. This verification includes accessing and extracting from the distributed records of the first network the key of the holder identified with the key of the content. In the same way, they also verify that the content belongs to the signing user, and that it is not already locked. The modules are programmed to check all the requirements that will be checked by the modules installed in the DApp, because sooner or later the smart contract will perform these checks before undertaking any modification.

If the signature does not match, or if the user is not the owner, or if the content is already locked, or if it does not pass all the checks that the smart contract would perform, the message is not accepted as legitimate and is ignored. This measure ensures not only that only the legitimate owner can sign the possible change of ownership of a content that belongs to him, but also that, eventually, the smart contract will accept to process the action proposed by the user. Since the DApp installed in the first network 110 is programmed to check these conditions before processing the actions, the fact that any node could malfunction, or in an intentionally malicious manner, would have no effect.

Upon receiving of the first message M1, the digital validation means 140 detects this action and proceeds to access 512 and extract 514 from the distributed records of the first network the data necessary to verify the actual ownership of the contents of the message M1. Alternatively, the digital validation means maintain in memory a synchronized copy of the base of the records of the first network, thus avoiding having to access it after receiving each message. If the holder stored in the first network does not match the holder identified in the first M1 message, the transmission process is aborted. Optionally, the user is expelled for improper impersonation. In another aspect, this check is carried out by the authorizer or the router of the second network upon receiving and before broadcasting. In the case of matching owners, and verifying that the transmitting user is indeed the legitimate owner of the content to be transmitted, the digital validation means 140 triggers 516 a first timer t1 representing a time interval for receiving responses to the first message.

Moreover, the router nodes 360, or any device so configured, are configured to periodically check for any updates to the first network. In particular, they are configured to check 520 whether there has been an update to the distributed fs (that is, the storage means) to determine that a first message M1 has been published. If so, they interact with the validator to read the first message along with its contents and broadcast 522 this first message to all devices 130 (comprising device 131 and any other devices 13n) in their user group.

In another aspect, the digital validation means 140 are configured to forward the first message M1 to the router nodes 360 of all second networks. The router nodes 360 of the second networks receive the first message and in turn broadcast it to all devices 130 (comprising device 131 and any other devices 13n) in their user group. In one aspect, the digital validation means 140 forwards exactly the same first message to all routers 360 of the second networks. In another aspect the digital validation means 140 forwards modified versions of the first message to the routers 360 depending on the second networks targeted. By way of example, the price may be varied or the offer time may be varied, or any other information contained in the message, depending on the second targeted network. For example, a first message may be sent to a second network with one value offer, or validity time, and a first message may be sent to another second network with another value offer, or validity time, or combination. In yet another aspect, some second networks may exclude themselves entirely from receiving the first message, broadcasting it only to a subset of second networks.

Upon being informed of the publication of a first message M1, any user interested in obtaining the content referenced by the first message M1 sends, through the use of the I-DAPP, acceptance of the content. This action is effected by the sending 530 of a second message M2, together with the digital signature, from the device 131 (or any device 13n) of the interested user to the authorizing node 370 of his respective second network, the second message M2 comprising a value that he is willing to transmit to the transmitting user in exchange for the content. In one aspect, the second message is sent directly to the authorizing node of the second network in which the user resides (shown in FIG. 5A), or alternatively according to another aspect, via the router through which the first message was received, in which case, it is forwarded from the router to the authorizing node.

Upon receiving the second M2 message, the authorizing node optionally proceeds to verify its digital signature. Optionally, it accesses the first network to check if there are any restrictions on this user; for example, it checks that he is not on a possible blacklist of unauthorized users, or that the total number of CAs he owns exceeds a pre-established limit, or that the CAs he intends to acquire are not authorized for the geographical area where the user recorded, and so on. If the digital signature is incorrect, or any of the checks fail, the second M2 message is ignored. Optionally, the user is expelled for improper impersonation, or blacklisted as an unauthorized user in memory. In any case, the authorizer 370 sends 532 the second M2 message to the validator 140 and the authorizer node is configured to broadcast 542 the second M2 message to the second network to which it belongs.

The write action is executed by the locker 330, of LOCK in the first distributed record network, wherein the content 540 is locked by modifying the corresponding field in the content restriction table so that it cannot be freely transmitted to other users. For this purpose, the digital validation means 140 interacts with the locker to provide 534 to the DApp the first message M1, as well as its digital signature. The locker is configured to determine that it has received the first message from the validator, and proceeds with the locking. In the meantime, as long as it is during the first interval t1, other users may bid for the content, however, in the meantime, the amount of interactions with the first network DApp has been minimized. In one aspect, the first message may optionally be stored in the distributed records of the first network, its content being open to verification by anyone.

The digital validation means 140 broadcasts the second message to the desired second networks via their respective routers (similarly to the broadcasting of the first message M1, not shown in the figure). This action in turn allows users who have sent second M2 messages to resend new second messages (M2', M2", ...) with updated content, while allowing new users to send their second M2 messages for the first time. The digital validation means 140 are configured to receive all these second messages, either directly or via the corresponding routers or authorizers (depending on how the I-DAPP in question is implemented).

The first timer represents a time interval t1 to allow the reading of the first message M1 by all second networks and the complete propagation to their users. It also allows receiving 550 second messages in addition to the first one, either first dispatches (M2) from other interested users, or from the same users who are updating the message (M2', M2", ...) with a higher value. Through the I-DAPP user interface of the software application, all users can be kept informed about the development of the transmission process (not represented in the drawing), since at least the digital means of validation 140 aggregate this information and broadcast it to all the second networks. In this way, the possibility is left open for other users to bid for the content, thus minimizing the number of interactions with the first DLT network.

In this aspect, the locker is configured to perform locking of the content data packet based solely on receiving of the first message M1 and its signature. In a further aspect, a user may interact directly (without using the I-DAPP, in which case it is not routed via the digital validation means 140) with the first network to perform a complete transmission. To do so, it needs to send 534' both a first message M1 and a second message M2 (obtained off-chain from another user) directly to the first network 110 locker (while the user's electronic device is configured to interact directly with the first network). In this way, the possibility is left open for other users to participate who have not been previously recorded by the digital validation means 140 who have nevertheless been informed about the possibility of using the DLT system to transmit their CAs. Unlike when the validator participates, as the user has not been previously validated, the locker requires it to provide both offer and acceptance messages, before proceeding with the locking of the data packet.

Continuing the process in **FIG. 5B,** at the expiry of the first time interval t1, the digital validation means 140 determines which user sent the second message with the highest value (the second final message M2*) of all the users from whom messages were received, and notifies this user of the fact, instructing him to proceed to pay, either directly between users, via a separate payment gateway, or otherwise, the value indicated in his last message M2 to the transmitting user. In one aspect, this payment indication is carried out by sending 560 a third message M3. In another aspect, a message is not sent to him as such, but rather the information is updated so that the final user is informed of his choice, and proceeds to make the payment.

At the same time, a second time interval t2 is triggered 562 for the payment 564 from the receiving user to the transmitting user to take place. If during the second time interval t2 the digital validation means receives proof that the value has been transferred from receiver to transmitter, the digital validation means proceeds to perform the write action of CONFIRM 570 the transmission by sending 566 the second final message M2* to the updater 320 of the first network.

The updater 320 is configured to require both the second final message M2* and its digital signature, and to perform the checks mentioned above, so as not to be vulnerable to a possible malfunction of the authorizer or validator. After a successful check, the updater replaces, in the ownership field of the content data packet, the identifier of the old owner with the new one, terminating the transmission of the content data packet.

In one aspect, the updater proceeds, at the same time, to record the second final message M2* in the distributed records of the first network so that it is available for checking by anyone. In another aspect, it does not proceed to store the second final message M2* in order to consume less computational and storage resources. In this way, the M1-M2* pair (first message M1 and second final message M2*) is stored transparently so that any user can be informed about the completion of the method, and the new owner of the content data packet.

Otherwise, if at the expiry of the second time interval t2 no proof of payment has been received, the digital validator automatically proceeds to notify (optionally by sending a third message M3) the user with the next highest value indicated in his message M2, triggering a new second time interval t2. The process is repeated iteratively until a valid proof of payment is received. Otherwise, if no proof of payment is received within a third time interval t3 and all users who have sent second M2 messages have been notified, the digital validator automatically performs the write action of CANCEL transmission.

In one aspect, the transmitting user, after having sent the first message M1 offering its contents and before any second locking message M2 has been received, can always send a message to the digital validator canceling the first message M1 to abort the transmission operation, which results in the digital validator automatically carrying out the write action of CANCEL the transmission. The digital validation means 140 performs this action, on the one hand, by interrupting the process of broadcasting the first message over all second networks. On the other hand, a message notifying of the cancellation of the process is sent to inform those users who have already received the first M1 message.

In another aspect, the program code of the processor is configured to, at the expiry of the third time interval t3, perform a CANCEL operation without the need for the corresponding write action, resulting in a more agile process, consuming fewer resources, and preventing a possible authorizer, or validator, operating incorrectly or fraudulently from leaving the crypto-asset locked indefinitely.

In one aspect, all, or a subset of, signed messages contain a field specifying a validity period of the message, with the intent that, after that period of time, the message is unusable. This field is checked by each system module that manages the message (validator, updater, locker, router, authorizer), especially the distributed code of the DApp, discarding the message once the validity period has passed. This aspect makes it possible to prevent any actor from saving messages for sale that have never been executed, or that have been locked in the processing queue without being processed, in order to put them back on the network in the future, when the seller has already changed his mind. This ensures that interactions are managed in real time, making system errors or malicious actions null and void due to the expiration of this predetermined time interval.

In another implementation, the data in the ownership sections of the data packets, and optionally all other sections of the data packet, are stored in memory in an ultra-compressed form. In one implementation, the ultracompression is obtained by applying a hash function to the result of concatenating all existing data packets. In another implementation, ultracompression is obtained by constructing a Merkle Tree, or a Sparse Merkle Tree, where the leaves of the tree correspond to the data packets, and storing only the root of the tree in memory. In these implementations it is not possible to obtain the ownership data from network 1, but if available, it is possible to verify that the available data corresponds to the data stored in memory, simply by obtaining the Merkle root of the available data and comparing it with the data in memory. Such implementations are useful to further reduce data writing to the network 1.

It is this operational phase of FIG. 5 that generates an immense amount of data that does not make it feasible by existing implementations. As described, existing systems cannot execute processes of transmitting hundreds of thousands of contents among millions of users, which is a necessity of the DLT environment considering the number of applications being deployed. Instead, as can be seen by the two stars of phases 540 and 570/580, for each transmission cycle, the first DLT network is interacted with only twice, allowing a minimum consumption of computational resources.

Therefore, a system and method is described that enables peer-to-peer transmission of digital content in the DLT environment. The process allows multiple sub-processes to be carried out on distinct user groups simultaneously, while at the same time ensuring that content is available at all times, and only completing transmission from one user to another once payment has been received for the highest value from all user groups, and with all user intentions explicitly verified by the smart contract via digital signature. Also, the enhanced system of the invention is distinguished from those in which the management of the CAs by the second network nodes is done 'on behalf of the users', or by 'delegation of the users'. In such systems, the manager has full authority to make ownership changes unilaterally, either because of the absence of explicit digital signature requirements, or because of knowledge of the secret keys. These systems are highly sensitive to malfunction, or fraudulent operation, on the part of the manager. On the contrary, in the enhanced system of the invention, the digital validator cannot perform any action not explicitly authorized by the legitimate users, since any ownership change process can be executed only by the DApp installed in the first network 110, and this one is configured to always perform all the required checks, in particular, those verifying that the actions were digitally signed by the correct users. In short, the transmission method is secure.

The number of interactions with the first network is also minimized by two simple operations: The first one of LOCK and the second one of CONFIRM/CANCEL. This simple operation allows potentially hundreds of thousands of DLT content transmission processes to be carried out globally among millions of users spread across multiple unconnected groups. By performing a single digital content transmission operation, it allows countless other operations to be performed on the same content in the meantime. It also prevents the problem of existing systems writing operations on the first network that are never completed, for example, writing millions of content offers while there is absolutely no one interested in them. This results in enormous congestion of the first network that does not allow it to be used efficiently. In contrast, the invention prevents its misuse. In addition, the system allows payment between users to be made in a way that does not require the use of cryptocurrency by these users. This prevents them from having to convert from fiat to crypto, as well as being exposed to its volatility. In addition, the system allows users to avoid having to pay the costs associated with running the code on the first network, which would involve, in addition to the expense, the obtaining and use of the network's native cryptocurrency by the users. In the enhanced system, this cost is contributed by the validators or authorizers. Therefore, the transmission method is optimized for minimum consumption of computational resources, memory, processors, and so on. In short, the transmission method is efficient.

The deployed program modules ensure that both users, transmitter and receiver, can rely on the operation, neither having lost one value without gaining another. That is, it is ensured that the transmitter only loses ownership of its content because it has received payment for the accepted value. At the same time, it ensures that the receiver only pays the indicated value because it is the highest value of all, and will receive the desired content in exchange. This operation solves the *double-spending* problem. In short, the transmission method is reliable.

Applications

The applications of the enhanced DLT system are manifold, and various technical advantages are obtained depending on the case.

In a first example application **(Example 1),** the application of the described system to a Massive Multiplayer Online Game (MMOG) DApp, for example, a soccer manager game, is considered. This type of game involves a league of soccer teams, each team comprising a number of virtual players. Each player is defined by a set of parameters, for example, strength, speed, skill, ability, and so on. As the team progresses through the league, it wins, loses or draws matches. Each player and each team is scored according to the result of the matches, and the way the team and its players are managed by the MMOG user. Therefore, after a period of time, there will be players and/or teams that have very high parameters and may be of interest to other MMOG users. It is even possible that there will be some star players with such a unique parameterization that may be of interest to other users who are not MMOG users.

In this case, virtual players are the content that can be transmitted between MMOG users. Once a player is transmitted from a transmitting user to a receiving user, the player becomes the property of the receiving user, who can incorporate him into his virtual team. Unlike other soccer manager games, in this case the content actually belongs to the MMOG users, and not to the DApp manager that manages the MMOG game. Being crypto-assets of a DLT network, the contents belong to whoever has the secret key of the content. In this case, the secret key of all the players are transmitted to their MMOG users when the equipment is generated, and later, when transmission operations are completed.

As an example, to give an idea of the magnitude and volume of data generated, in a real case, there may be 15 million matches played between 30 million players every hour, requiring, on a global level, the storage of the result of at least 360 million matches every day in the DLT network. This high degree of interaction can result in the daily transmission of thousands of virtual players. It is apparent to the person skilled in the art that existing DLT networks are completely incapable of making this type of DApp a reality, whereas the features of the invention allow very frequent updating of this immense amount of data in an optimized manner.

In a second example application **(Example 2),** the application of the described system to a DApp of the Internet of Things, IOT environment, for example, a weather validator, is considered. This example addresses the need to store in network 1 immutable sensor reading values that other entities will need to verify and use. For example, storing in the DLT network those meteorological data (atmospheric temperature, atmospheric pressure, wind, earthquakes, and so on) that an insurance entity can reliably reference for its decision making regarding an incident it is managing. This type of application involves a list of areas in which sensors automatically output their measured data.

The sensors may also belong to a private user who is responsible for maintaining and providing the data from their multiple sensors. The sensor data may be packaged and transmitted as content. As an example, the insurance company may be interested in acquiring ownership of a content packet, or a stream of content packets. The DLT network not only serves as a large database to store all the generated sensor data, but also to store the ownership of the generated content, as well as its movement and transmission history. As an example, to give an idea of the magnitude and volume of data generated, in a real case, there may be 20 billion sensors emitting every hour, requiring, globally, the storage of the result of at least 480 billion data every day in the DLT network. It is apparent to the person in the trade that existing DLT networks are completely incapacitated to make this type of DApp a reality, whereas the features of the invention allow very frequent updating of this immense amount of data in an optimized manner.

In a third example application **(Example 3),** a marketplace of digital artworks, for example 'paintings', 'images' or 'music', is considered. In this case, the content of each artwork may be stored in uncompressed format on network 1 or, more optimally, in ultra-compressed format, for example, by calculating the file hash. This type of market is accustomed to using the auction method.

In a fourth example application **(Example 4),** similar to Example 3, but with digital identifiers of objects that exist in the physical world, for example, an identifier that refers to a sneaker of a particular brand.

In a fifth example application **(Example 5),** which is applicable to all of the above examples, a multi-market situation, on a global scale, is considered. In this example, the CAs described in the previous examples are offered simultaneously in several markets, located in multiple geographies of the planet. Each market constitutes a type 2 network, disconnected from the rest of the type 2 networks. Each market specializes in selling in its geographic area, adapting its marketing, websites, and so on, to the market it dominates. Thus, the same CA appears in a different environment, in possibly different languages, in each market. Crucially, it may appear with different starting prices in each market; it may be offered in a different currency in each market (Euros, Dollars, Yens, and so on); it may even be offered by different auction processes (increasing, decreasing price, and so on) in each market. Despite the potentially large number of interactions that take place in each market, the DLT network is used only at 2 main moments: when a buyer has been found in one of these markets, and when payment has been made in the currency for which it was offered in the corresponding market.

Therefore, the inventors have developed various aspects implemented as an enhanced DLT system, and corresponding method, comprising a network architecture that enables the execution of DApps that generate immense amounts of data to be stored in the DLT network in a secure, reliable and efficient manner. In terms of technical advantages, the features of the invention enable the secure transmission of digital assets in programmable DLTs, potentially incorporating sophisticated logic, such as auction systems, while minimizing the cost in terms of computational resources. In addition, the DApp manager does not hold or store the secret key of the content, which is always held by the current owner of the content in question, resulting in a secure mode of content management. Upon completion of a transmission, the recipient of the content is the new custodian of the content's secret key, and the change of ownership is recorded in the distributed records of the DLT network for anyone to reference. Again, the secret key does not pass through the hands of the DApp manager, minimizing the potential for malpractice by DApp managers, or their operators. The invention provides protection against *double-spending,* preventing any transmitting user from benefiting from transmitting more than once its content, for example, to two different receiving users. All this while allowing simultaneous interaction, in relation to the same content, between multiple users from different and unconnected groups, ensuring that there will be only one final receiving user as the new owner of the content.

Also relevant to users of the system are other advantages such as allowing the DApp manager to perform its optimal communication system management functions for peer-to-peer transmission of content without the need to receive/transmit money, without the need to store deposits of any kind, without the existing volatility problems, without the need to sacrifice payment of high amounts of cryptocurrencies to perform numerous write functions on the DLT network.

Thus, the enhanced DLT system allows the execution of DApps that require frequent interaction between multiple users sustained over time in an efficient and optimal manner. Thus, the generation and execution of DApps in the DLT environment is facilitated, providing the missing support for them to become a reality.

It is further understood that the described embodiments and aspects may be implemented by various means in hardware, software, firmware, middleware, microcode, or any combination thereof. Various aspects or features described may be implemented, on the one hand, as a method or procedure or function, and on the other hand, as an apparatus, device, system, or computer program accessible by any computer-readable device, carrier, or medium. The described procedures or algorithms can be implemented directly in hardware, in a software module executed by a processor, or a combination of the two.

The various media may comprise software modules resident in RAM memory, flash memory, ROM memory, EPROM memory, EEPROM memory, registers, hard disk, removable disk, a CD-ROM, or any other type of storage medium known in the art.

The various means may comprise logic locks, modules, and circuits may be implemented or carried out by a general purpose processor, a digital signal processor (DSP), an application specific integrated circuit (ASIC), an field programmable gate array (FPGA), or other programmable logic, discrete gate or transistor logic devices, discrete hardware components, or any combination thereof designed to carry out the described functions. A general purpose processor may be a microprocessor, but alternatively, the processor may be a conventional processor, controller, microcontroller, or state machine.

The various media may comprise computer-readable media including, but not limited to, magnetic storage devices (for example, hard disks, floppy disks, magnetic strips, and the like), optical disks (for example, compact disks CD or versatile DVDs, and the like), smart cards, and temporary flash storage drives (for example, EPROM, pen card, key drive, and the like). Additionally, the described array of storage media may represent one or more devices and/or computer-readable media for storing information. The term computer-readable medium may comprise, without being limited thereto, a variety of media capable of storing, saving, or transporting instructions and/or data. Additionally, a computer program product may comprise a computer-readable medium with one or more instructions or operating codes for causing a computer to perform the described functions once executed on the computer.

What has been described comprises one or more embodiments by way of example. It is of course not possible to describe every conceivable combination, or permutation, of the components and/or methodologies for the purpose of describing the aforementioned embodiments. Instead, the skilled person will realize that many other combinations and permutations of various realizations are possible within the inventive concept after a straightforward and objective reading of this disclosure. Accordingly, it is intended to embrace all such alterations, modifications and variations that fall within the scope of the appended claims.

Further, the skilled person in the art would understand that the various embodiments may be implemented in hardware, software, firmware, middleware, microcode, or any combination thereof. Various aspects or features described may be implemented, on the one hand, as a method or procedure or function, and on the other hand, as an apparatus, device, system, or computer program accessible by any computer-readable device, carrier, or medium. The described procedures or algorithms may be implemented directly in hardware, in a software module executed by a processor, or a combination of the two. The various media may comprise software modules resident in RAM memory, flash memory, ROM memory, EPROM memory, EEPROM memory, registers, hard disk, removable disk, a CD-ROM, or any other type of storage medium known in the art.

The various means may comprise logic locks, modules, and circuits may be implemented or carried out by a general purpose processor, a digital signal processor (DSP), an application specific integrated circuit (ASIC), a field programmable gate array (FPGA), or other programmable logic, discrete gate or transistor logic devices, discrete hardware components, or any combination thereof designed to carry out the described functions. A general purpose processor may be a microprocessor, but in the alternative, the processor may be a conventional processor, controller, microcontroller, state machine, or embedded processor.

The various media may comprise computer-readable media including, but not limited to, magnetic storage devices (for example, hard disks, floppy disks, magnetic strips, and the like), optical disks (for example, CD compact disks or versatile DVDs, and the like), smart cards, and temporary flash storage drives (for example, EPROMs). Additionally, the described array of storage media may represent one or more devices and/or computer-readable media for storing information. The term computer-readable medium may comprise, without being limited thereto, a variety of media capable of storing, saving, or transporting instructions and/or data. Additionally, a computer program product may comprise a computer-readable medium with one or more instructions or operating codes for causing a computer to perform the described functions once executed on the computer.

What has been described comprises several realizations by way of example. As it is neither possible nor feasible to describe in detail all the variety of combinations and permutations of the inventive concept which would give rise to a large number of realizations, the drafter understands that the person in the trade would derive, after a direct and objective reading of this disclosure, the various possible permutations and combinations, without departing from the general inventive concept described. Therefore, the principal embodiments have been described, it being understood that they comprise the other combinations, variations and modifications.

Certain additional aspects or examples are described in the following:
A digital locker for peer-to-peer transmission of a packet of content data from a transmitting user to a receiving user, wherein the digital locker is deployed in a distributed manner in a first programmable peer-to-peer distributed ledger network configured for executing decentralized applications, wherein the digital locker comprises: digital means configured for receiving a first message comprising an identifier of the content data packet; and digital means configured for modifying the state of the content data packet, in the storage means of the first distributed ledger network, to locked, upon receiving of the first message, once, in reaction to the first message, the first of at least one second message comprising a value parameter corresponding to the content data packet has been sent.

The locker, wherein the content data packet comprises a locking field, which indicates whether the content data packet is locked, or unlocked, from being transmitted between users. The locker, further comprising digital means for verifying the legitimacy of the sender of the messages. The locker, wherein legitimacy is checked by verifying the digital signatures of the messages received, using the secret key of an asymmetric encryption public-key secret-key pair. The locker, wherein the first message is received together with the second message from an electronic device of a user. The locker of claim 3, wherein the first message is received from a digital validator external to the first network. The locker, wherein the first message is received from a digital authorizer. The locker, further comprising digital means configured for receiving an unlock message comprising the content data packet identifier, and for modifying the state of the content data packet, on the storage means of the first distributed ledger network, to unlocked, upon receiving of the unlock message. The locker, wherein the sender of the unlocking message is a digital validator or is a digital authorizer or is a digital updater. The locker, further comprising digital means configured for storing the first message in storage means of the first distributed ledger network.

A digital validator for peer-to-peer transmission of a packet of content data from a transmitting user to a receiving user, wherein the digital validator comprises: digital means configured for receiving a first message, from an electronic device of the transmitting user, comprising an identifier of the content data packet; and digital means configured for receiving, in reaction to the first message, from at least one other electronic device, at least one second message comprising a value parameter corresponding to the content data packet, the at least one other electronic device comprising an electronic device of the receiving user; and digital means configured for interacting with the digital locker of claim 1, deployed in a distributed manner in a first programmable peer-to-peer distributed ledger network configured for executing decentralized applications, for modifying the state of the content data packet, in the storage means of the first distributed ledger network, to locked, upon receiving a first of the at least one second message.

The validator, wherein the content data packet comprises a locking field, which indicates whether the content data packet is locked, or unlocked, from being transmitted between users. The validator, further comprising digital means for verifying the legitimacy of the sender of the messages. The validator, wherein legitimacy is checked by verifying the digital signatures of the messages received, using the secret key of an asymmetric encryption public-key secret-key pair. The validator, wherein the first message is received together with the second message from an electronic device of a user. The validator, further comprising digital means configured for sending the first message to a digital authorizer or a digital router. The validator, wherein the content data packet comprises a holder field, comprising an identifier of the user who is the owner of the content data packet. The validator, further comprising digital means for storing the content-related data in the storage means in an ultra-compressed form by applying a hash function to the result of concatenating all existing data packets, or by generating a Merkle tree, or by generating a sparse Merkle tree where the leaves of the tree correspond to the data packets and storing only the root of the tree. The validator, further comprising digital means configured for, upon receiving of the first message, triggering a timer defining a first time interval for receiving the second messages. The validator, further comprising digital means configured for, at the expiry of the first time interval, identifying the second message with the highest value of all second messages received, and notifying the corresponding user, while triggering a timer defining a second time interval for receiving a proof of payment. The validator, further comprising digital means configured for, upon receiving of the proof of payment during the second time interval, confirming the transmission of the content data packet from the transmitting user to the receiving user. The validator, further comprising digital means configured for, if at the expiry of the second time interval no proof of payment has been received, identifying the second message with the next highest value of all the second messages received, and notifying the corresponding user, and at the same time triggering the second time interval timer again, and so on successively, until a proof of payment is received and the transmission is confirmed. The validator, wherein confirming the transmission comprises interacting with a digital update means for modifying the identifier of the content data packet holder to the identifier of the receiving user, and for modifying the state of the content data packet to unlocked. The validator, further comprising digital means configured for interacting with a digital update means for canceling the transmission and for modifying the state of the content data packet to unlocked, once it is determined that all users who have sent second messages have been notified and that no proof of payment has been received. The validator, wherein the first message is received together with the second message from an electronic device of a user. The validator, further comprising digital means configured for storing the first message in storage means of the distributed records of the first network.

A digital programmable distributed ledger system for peer-to-peer transmission of a packet of content data from a transmitting user to a receiving user, the system comprising: an electronic device of the transmitting user configured for sending a first message comprising a unique identifier of the content data packet; at least one other electronic device configured for, in reaction to the first message, sending at least one second message comprising a value parameter corresponding to the content data packet, the at least one other electronic device comprising an electronic device of the receiving user; at least a first programmable peer-to-peer distributed ledger network configured for executing decentralized applications comprising a plurality of nodes configured for communicating directly among eachother, in which deployed in a distributed manner are: storage means comprising a state of the content data packet among locked or unlocked; a digital locker according to claim 1 configured for modifying, in the storage means, the state of the content data packet from locked to unlocked and from unlocked to locked; and at least one digital validator according to claim 11 configured for interacting with the digital locker for modifying the state of the content data packet in the first distributed ledger network, to locked, upon receiving of the first of at least one second message.

The system, wherein the storage means comprises the unique identifier of the content data packet. The system, wherein the content data packet comprises a locking field, which indicates whether the content data packet is locked, or unlocked, from being transmitted between users. The system, wherein the content data packet comprises a holder field, comprising an identifier of the user who is the owner of the content data packet. The system, wherein the data are stored in the storage means in an ultra-compressed form by applying a hash function to the result of concatenating all existing data packets, or by generating a Merkle tree, or by generating a sparse Merkle tree where the leaves of the tree correspond to the data packets and storing only the root of the tree. The system, further comprising digital means for verifying the legitimacy of the sender of the messages. The system, wherein legitimacy is checked by verifying the digital signatures of the messages received, using the secret key of an asymmetric encryption public-key secret-key pair. The system, wherein the first message is received together with the second message from an electronic device of a user. The system, wherein the first message is received from a digital validator external to the first network. The system, wherein, upon receiving the first of the at least one second message, the digital validator is configured for triggering a timer that defines a first time interval for receiving further second messages. The system, wherein, at the expiry of the first time interval, the digital validator is configured for identifying the second message with the highest value of all the second messages received, and notifying the corresponding user, and at the same time, triggering a timer that defines a second time interval to receive a proof of payment. The system, wherein, upon receiving of the proof of payment during the second time interval, the digital validator is configured for confirming the transmission of the content data packet from the transmitting user to the receiving user by sending a confirmation message. The system, wherein, if at the expiry of the second time interval no proof of payment has been received, the digital validator is configured for identifying the second message with the next highest value of all the second messages received, and notifying the corresponding user, and at the same time, triggering the second time interval timer again, and so on successively, until a proof of payment is received and the transmission is confirmed by sending a confirmation message. The system, further comprising a digital updater deployed in a distributed manner in the first programmable peer-to-peer distributed ledger network, the digital updater comprising: digital means configured for receiving the confirmation message comprising an identifier of the content data packet; digital means configured for modifying the identifier of the owner of the content data packet to the identifier of the receiving user; and digital means configured for interacting with the locker of the first network to modify the state of the content data packet to unlocked. The system, wherein the sender of the confirmation message is a digital validator, or a digital authorizer comprised in at least a second network of electronic devices. The system, wherein the digital validator is configured for interacting with the digital updater for canceling the transmission by sending a cancellation message, once it is determined that all users who have sent second messages have been notified and that no proof of payment has been received. The system, wherein the digital updater additionally comprises, digital means configured for receiving a cancellation message comprising an identifier of the content data packet; and digital means configured for interacting with the digital locker of the first network for modifying the state of the content data packet to unlocked. The system, wherein the digital updater is configured for automatically canceling the transmission and unlock the content data packet at the expiry of a third time interval. The system, wherein the digital updater is configured for automatically canceling transmission at the expiry of a third time interval. The system, wherein the digital updater is configured for canceling the transmission upon receiving of a cancellation message of the first message while the content data packet is in the unlocked state. The system, wherein the at least one second network of electronic devices comprises at least one digital routing means, configured for receiving the first message and broadcasting it to all other electronic devices in the second network. The system, wherein the digital validator is configured for, in an initial phase, deploying the storage means, the digital updater, and the digital locker, in a distributed manner on the nodes of the first programmable peer-to-peer distributed ledger network, and configured for deploying the digital routing means and the digital means of authorization on the electronic devices of the second network. The system, wherein the digital validator is configured for downloading, on demand, an interface module for installation in at least one electronic device, allowing communications with the different nodes and with the first distributed ledger network, either directly, or through the digital validator, or through the digital authorizer, or through the digital router. The digital locker or digital validator or digital updater or digital system, wherein the decentralized application deployed on the first programmable distributed ledger network is a massive multiplayer online manager game of a team sport, and wherein the content data packets are players of a team, or a team. The digital locker or digital validator or digital updater or digital system, wherein the decentralized application deployed on the first programmable distributed ledger network is a meteorological validator, wherein the content data packets are data packets from meteorological sensors. The digital locker or digital validator or digital updater or digital system, wherein the decentralized application deployed on the first programmable distributed ledger network is a market for digital artworks, and in which the content data packets are digital artworks. The digital locker or digital validator or digital updater or digital system, wherein the content data packets identify a real object. The digital locker or digital validator or digital updater or digital system, comprising a plurality of second networks in which the same first message is broadcast, but a plurality of second messages are received comprising different values.

A method in a digital locker for peer-to-peer transmission of a packet of content data from a transmitting user to a receiving user, wherein the digital locker is deployed in a distributed manner in a first programmable peer-to-peer distributed ledger network configured for executing decentralized applications, wherein the method comprises: receiving a first message comprising an identifier of the content data packet; and modifying the state of the content data packet, in the storage means of the first distributed ledger network, to locked, upon receiving the first message, once, in reaction to the first message, the first of at least one second message comprising a value parameter corresponding to the content data packet has been sent.

The method, wherein the content data packet comprises a locking field, which indicates whether the content data packet is locked, or unlocked, from being transmitted between users. The method, further comprising verifying the legitimacy of the sender of the messages. The method, wherein legitimacy is checked by verifying the digital signatures of the messages received using the secret key of an asymmetric encryption public-key secret-key pair. The method, wherein the first message is received together with the second message from an electronic device of a user. The method, wherein the first message is received from a digital validator external to the first network. The method, wherein the first message is received from a digital authorizer. The method, further comprising receiving an unlock message comprising the content data packet identifier, and modifying the state of the content data packet, on the storage means of the first distributed ledger network, to unlocked, upon receiving of the unlock message.

The method, wherein the sender of the unlocking message is a digital validator or is a digital authorizer or is a digital updater. The method, further comprising storing the first message in storage means of the first distributed ledger network.

A method in a digital validator for peer-to-peer transmission of a packet of content data from a transmitting user to a receiving user, wherein the method comprises: receiving a first message, from an electronic device of the transmitting user, comprising an identifier of the content data packet; receiving, in reaction to the first message, from at least one other electronic device, at least one second message comprising a value parameter corresponding to the content data packet, the at least one other electronic device comprising an electronic device of the receiving user; and interacting with the digital locker of claim 55, deployed in a distributed manner in a first programmable peer-to-peer distributed ledger network configured for executing decentralized applications, for modifying the state of the content data packet, in the storage means of the first distributed ledger network, to locked, upon receiving a first of the at least one second message.

The method, wherein the content data packet comprises a locking field, which indicates whether the content data packet is locked, or unlocked, from being transmitted between users. The method, further comprising verifying the legitimacy of the sender of the messages. The method, wherein legitimacy is checked by verifying the digital signatures of the messages received, using the secret key of an asymmetric encryption public-key secret-key pair. The method, wherein the first message is received together with the second message from an electronic device of a user. The method, further comprising sending the first message to a digital authorizer or to a digital router. The method, wherein the content data packet comprises a holder field, comprising an identifier of the user who is the owner of the content data packet. The method, further comprising storing the content-related data in the storage means in an ultra-compressed form by applying a hash function to the result of concatenating all existing data packets, or by generating a Merkle tree, or by generating a sparse Merkle tree where the leaves of the tree correspond to the data packets and storing only the root of the tree. The method, further comprising, upon receiving of the first message, triggering a timer defining a first time interval for receiving the second messages. The method, further comprising, at the end of the first time interval, identifying the second message with the highest value of all second messages received, and notifying the corresponding user, while triggering a timer defining a second time interval for receiving a proof of payment. The method, further comprising, upon receiving of the proof of payment during the second time interval, confirming the transmission of the content data packet from the transmitting user to the receiving user. The method, further comprising, if at the expiry of the second time interval no proof of payment has been received, identifying the second message with the next highest value of all the second messages received, and notifying the corresponding user, and at the same time triggering the second time interval timer again, and so on successively, until a proof of payment is received and the transmission is confirmed. The method, wherein confirming the transmission comprises modifying the identifier of the content data packet holder to the identifier of the receiving user, and for modifying the state of the content data packet to unlocked. The method, further comprising canceling the transmission and modifying the state of the content data packet to unlocked, once it is determined that all users who have sent second messages have been notified and that no proof of payment has been received. The method, further comprising storing the first message in a storage means of the first distributed ledger network.

A method in a digital programmable distributed ledger system for peer-to-peer transmission of a packet of content data from a transmitting user to a receiving user, the method comprising: sending, by an electronic device of the transmitting user, a first message comprising a unique identifier of the content data packet; sending, by at least one other electronic device in reaction to the first message, at least one second message comprising a value parameter corresponding to the content data packet, the at least one other electronic device comprising an electronic device of the receiving user; and modifying, upon receiving of the first of the at least one second message, by the digital validator of claim 65 by interacting with the digital locker of claim 55 deployed in a distributed manner in a first programmable peer-to-peer distributed ledger network configured for executing decentralized applications comprising a plurality of nodes configured for communications directly among eachother, the state of the content data packet in the first distributed ledger network, from unlocked to locked.

The method, wherein the storage means comprises the unique identifier of the content data packet. The method, wherein the content data packet comprises a locking field, which indicates whether the content data packet is locked, or unlocked, from being transmitted between users. The method, wherein the content data packet comprises a holder field, comprising an identifier of the user who is the owner of the content data packet. The method, wherein the data are stored in the storage means in an ultra-compressed form by applying a hash function to the result of concatenating all existing data packets, or by generating a Merkle tree, or by generating a sparse Merkle tree where the leaves of the tree correspond to the data packets and storing only the root of the tree. The method, further comprising verifying the legitimacy of the sender of the messages. The method, wherein legitimacy is checked by verifying the digital signatures of the messages received, using the secret key of an asymmetric encryption public-key secret-key pair. The method, wherein the first message is received together with the second message from an electronic device of a user. The method, wherein the first message is received from a digital validator external to the first network. The method, wherein, upon receiving the first of the at least one second message, the digital validator is configured for triggering a timer that defines a first time interval for receiving further second messages. The method, wherein, at the expiry of the first time interval, the digital validator identifies the second message with the highest value of all the second messages received, and notifying the corresponding user, and at the same time, triggering a timer that defines a second time interval to receive a proof of payment. The method, wherein, upon receiving of the proof of payment during the second time interval, the digital validator confirms the transmission of the content data packet from the transmitting user to the receiving user by sending a confirmation message. The method, wherein, if at the expiry of the second time interval no proof of payment has been received, the digital validator identifies the second message with the next highest value of all the second messages received, and notifes the corresponding user, and at the same time, triggers the second time interval timer again, and so on successively, until a proof of payment is received and the transmission is confirmed by sending a confirmation message. The method, further comprising a digital updater deployed in a distributed manner in the first programmable peer-to-peer distributed ledger network, comprising: receiving the confirmation message comprising an identifier of the content data packet; modifying the identifier of the owner of the content data packet to the identifier of the receiving user; and

modifying the state of the content data packet to unlocked. The method, wherein the sender of the confirmation message is a digital validator, or a digital authorizer. The method, comprising canceling the transmission by sending a cancellation message, once it is determined that all users who have sent second messages have been notified and that no proof of payment has been received. The method, further comprising, receiving a cancellation message comprising an identifier of the content data packet; and modifying the state of the content data packet to unlocked. The method, further comprising automatically canceling the transmission, and unlocking the content data packet at the expiry of a third time interval. The method, further comprising automatically canceling the transmission at the expiry of a third time interval. The method, comprising canceling the transmission upon receiving of a cancellation message of the first message while the content data packet is in the unlocked state. The method, further comprising receiving the first message and broadcasting it to all other electronic devices in the second network. The method, further comprising, in an initial phase, deploying the storage means, the digital updater, and the digital locker, in a distributed manner on the nodes of the first programmable peer-to-peer distributed ledger network, and deploying the digital routing means and the digital means of authorization on the electronic devices of the second network. The method, comprising downloading, on demand, an interface module for installation in at least one electronic device, allowing communications with the different nodes and with the first distributed ledger network, either directly, or through the digital validator, or through the digital authorizer, or through the digital router. The method, wherein the decentralized application deployed on the first programmable distributed ledger network is a massive multiplayer online manager game of a team sport, and wherein the content data packets are players of a team, or a team. The method, wherein the decentralized application deployed on the first programmable distributed ledger network is a meteorological validator, wherein the content data packets are data packets from meteorological sensors. The method, wherein the decentralized application deployed on the first programmable distributed ledger network is a market for digital artworks, and in which the content data packets are digital artworks. The method, wherein the content data packets identify a real object. The method, comprising a plurality of second networks in which the same first message is broadcast, but a plurality of second messages are received comprising different values.

A computer program which comprises instructions, once executed on a processor, for performing the method steps.

A computer readable medium which comprises instructions, once executed on a processor, for performing the method steps.

**Claims**

1. A digital locker for peer-to-peer transmission of a packet of content data from a transmitting user to a receiving user, wherein the digital locker is deployed in a distributed manner in a first programmable peer-to-peer distributed ledger network configured for executing decentralized applications, wherein the digital locker comprises:

   digital means configured for receiving a first message comprising an identifier of the content data packet; and digital means configured for modifying the state of the content data packet, in the storage means of the first distributed ledger network, to locked, upon receiving of the first message, once, in reaction to the first message, the first of at least one second message comprising a value parameter corresponding to the content data packet has been sent.

2. The locker of claim 1, wherein the content data packet comprises a locking field, which indicates whether the content data packet is locked, or unlocked, from being transmitted between users.

3. The locker of claim 2, further comprising digital means for verifying the legitimacy of the sender of the messages.

4. The locker of claim 3, wherein legitimacy is checked by verifying the digital signatures of the messages received, using the secret key of an asymmetric encryption public-key secret-key pair.

5. The locker of claim 2, wherein the first message is received together with the second message from an electronic device of a user.

6. The locker of claim 3, wherein the first message is received from a digital validator external to the first network.

7. The locker of claim 3, wherein the first message is received from a digital authorizer.

8. The locker of claim 3, further comprising digital means configured for receiving an unlock message comprising the content data packet identifier, and for modifying the state of the content data packet, on the storage means of the first distributed ledger network, to unlocked, upon receiving of the unlock message.

9. The locker of claim 8, wherein the sender of the unlocking message is a digital validator or is a digital authorizer or is a digital updater.

10. The locker of any one of the preceding claims, further comprising digital means configured for storing the first message in storage means of the first distributed ledger network.

11. A digital validator for peer-to-peer transmission of a packet of content data from a transmitting user to a receiving user, wherein the digital validator comprises:

digital means configured for receiving a first message, from an electronic device of the transmitting user, comprising an identifier of the content data packet; and
digital means configured for receiving, in reaction to the first message, from at least one other electronic device, at least one second message comprising a value parameter corresponding to the content data packet, the at least one other electronic device comprising an electronic device of the receiving user; and
digital means configured for interacting with the digital locker of claim 1, deployed in a distributed manner in a first programmable peer-to-peer distributed ledger network configured for executing decentralized applications, for modifying the state of the content data packet, in the storage means of the first distributed ledger network, to locked, upon receiving a first of the at least one second message.

12. The validator of claim 11, wherein the content data packet comprises a locking field, which indicates whether the content data packet is locked, or unlocked, from being transmitted between users.

13. The validator of claim 12, further comprising digital means for verifying the legitimacy of the sender of the messages.

14. The validator of claim 13, wherein legitimacy is checked by verifying the digital signatures of the messages received, using the secret key of an asymmetric encryption public-key secret-key pair.

15. The validator of claim 12, wherein the first message is received together with the second message from an electronic device of a user.

16. The validator of claim 13, further comprising digital means configured for sending the first message to a digital authorizer or a digital router.

17. The validator of claim 12, wherein the content data packet comprises a holder field, comprising an identifier of the user who is the owner of the content data packet.

18. The validator of claim 12, further comprising digital means for storing the content-related data in the storage means in an ultra-compressed form by applying a hash function to the result of concatenating all existing data packets, or by generating a Merkle tree, or by generating a sparse Merkle tree where the leaves of the tree correspond to the data packets and storing only the root of the tree.

19. The validator of claim 12, further comprising digital means configured for, upon receiving of the first message, triggering a timer defining a first time interval for receiving the second messages.

20. The validator of claim 19, further comprising digital means configured for, at the expiry of the first time interval, identifying the second message with the highest value of all second messages received, and notifying the corresponding user, while triggering a timer defining a second time interval for receiving a proof of payment.

21. The validator of claim 20, further comprising digital means configured for, upon receiving of the proof of payment during the second time interval, confirming the transmission of the content data packet from the transmitting user to the receiving user.

22. The validator of claim 20, further comprising digital means configured for, if at the expiry of the second time interval no proof of payment has been received, identifying the second message with the next highest value of all the second messages received, and notifying the corresponding user, and at the same time triggering the second time interval timer again, and so on successively, until a proof of payment is received and the transmission is confirmed.

23. The validator of claim 21 or 22, wherein confirming the transmission comprises interacting with a digital update means for modifying the identifier of the content data packet holder to the identifier of the receiving user, and for modifying the state of the content data packet to unlocked.

24. The validator of claim 20, further comprising digital means configured for interacting with a digital update means for canceling the transmission and for modifying the state of the content data packet to unlocked, once it is determined that all users who have sent second messages have been notified and that no proof of payment has been received.

25. The validator of claim 12, wherein the first message is received together with the second message from an electronic device of a user.

26. The validator of any of the preceding claims, further comprising digital means configured for storing the first message in storage means of the distributed records of the first network.

27. A digital programmable distributed ledger system for peer-to-peer transmission of a packet of content data from a transmitting user to a receiving user, the system comprising:

an electronic device of the transmitting user configured for sending a first message comprising a unique identifier of the content data packet;
at least one other electronic device configured for, in reaction to the first message, sending at least one second message comprising a value parameter corresponding to the content data packet, the at least one other electronic device comprising an electronic device of the receiving user;
at least a first programmable peer-to-peer distributed ledger network configured for executing decentralized applications comprising a plurality of nodes configured for communicating directly among eachother, in which deployed in a distributed manner are:

storage means comprising a state of the content data packet among locked or unlocked;
a digital locker according to claim 1 configured for modifying, in the storage means, the state of the content data packet from locked to unlocked and from unlocked to locked; and
at least one digital validator according to claim 11 configured for interacting with the digital locker for modifying the state of the content data packet in the first distributed ledger network, to locked, upon receiving of the first of at least one second message.

28. The system of claim 27, wherein the storage means comprises the unique identifier of the content data packet.

29. The system of claim 28, wherein the content data packet comprises a locking field, which indicates whether the content data packet is locked, or unlocked, from being transmitted between users.

30. The system of claim 29, wherein the content data packet comprises a holder field, comprising an identifier of the user who is the owner of the content data packet.

31. The system of claim 30, wherein the data are stored in the storage means in an ultra-compressed form by applying a hash function to the result of concatenating all existing data packets, or by generating a Merkle tree, or by generating a sparse Merkle tree where the leaves of the tree correspond to the data packets and storing only the root of the tree.

32. The system of claim 29, further comprising digital means for verifying the legitimacy of the sender of the messages.

33. The system of claim 32, wherein legitimacy is checked by verifying the digital signatures of the messages received, using the secret key of an asymmetric encryption public-key secret-key pair.

**34.** The system of claim 29, wherein the first message is received together with the second message from an electronic device of a user.

**35.** The system of claim 32, wherein the first message is received from a digital validator external to the first network.

**36.** The system of claim 29, wherein, upon receiving the first of the at least one second message, the digital validator is configured for triggering a timer that defines a first time interval for receiving further second messages.

**37.** The system of claim 36, wherein, at the expiry of the first time interval, the digital validator is configured for identifying the second message with the highest value of all the second messages received, and notifying the corresponding user, and at the same time, triggering a timer that defines a second time interval to receive a proof of payment.

**38.** The system of claim 37, wherein, upon receiving of the proof of payment during the second time interval, the digital validator is configured for confirming the transmission of the content data packet from the transmitting user to the receiving user by sending a confirmation message.

**39.** The system of claim 37, wherein, if at the expiry of the second time interval no proof of payment has been received, the digital validator is configured for identifying the second message with the next highest value of all the second messages received, and notifying the corresponding user, and at the same time, triggering the second time interval timer again, and so on successively, until a proof of payment is received and the transmission is confirmed by sending a confirmation message.

**40.** The system of claim 38 or 39, further comprising a digital updater deployed in a distributed manner in the first programmable peer-to-peer distributed ledger network, the digital updater comprising:

digital means configured for receiving the confirmation message comprising an identifier of the content data packet;
digital means configured for modifying the identifier of the owner of the content data packet to the identifier of the receiving user; and
digital means configured for interacting with the locker of the first network to modify the state of the content data packet to unlocked.

**41.** The system of claim 40, wherein the sender of the confirmation message is a digital validator, or a digital authorizer comprised in at least a second network of electronic devices.

**42.** The system of claim 37, wherein the digital validator is configured for interacting with the digital updater for canceling the transmission by sending a cancellation message, once it is determined that all users who have sent second messages have been notified and that no proof of payment has been received.

**43.** The system of claim 40, wherein the digital updater additionally comprises,

digital means configured for receiving a cancellation message comprising an identifier of the content data packet; and
digital means configured for interacting with the digital locker of the first network for modifying the state of the content data packet to unlocked.

**44.** The system of claim 29, wherein the digital updater is configured for automatically canceling the transmission and unlock the content data packet at the expiry of a third time interval.

**45.** The system of claim 29, wherein the digital updater is configured for automatically canceling transmission at the expiry of a third time interval.

**46.** The system of claim 29, wherein the digital updater is configured for canceling the transmission upon receiving of a cancellation message of the first message while the content data packet is in the unlocked state.

**47.** The system of claim 29, wherein the at least one second network of electronic devices comprises at least one digital routing means, configured for receiving the first message and broadcasting it to all other electronic devices in the second network.

**48.** The system of claim 29, wherein the digital validator is configured for, in an initial phase, deploying the storage means, the digital updater, and the digital locker, in a distributed manner on the nodes of the first programmable peer-to-peer distributed ledger network, and configured for deploying the digital routing means and the digital means of authorization on the electronic devices of the second network.

**49.** The system of claim 48, wherein the digital validator is configured for downloading, on demand, an interface module for installation in at least one electronic device, allowing communications with the different nodes and with the first distributed ledger network, either directly, or through the digital validator, or through the digital authorizer, or through the digital router.

**50.** The digital locker or digital validator or digital updater or digital system of any one of the preceding claims, wherein the decentralized application deployed on the first programmable distributed ledger network is a massive multiplayer online manager game of a team sport, and wherein the content data packets are players of a team, or a team.

**51.** The digital locker or digital validator or digital updater or digital system of any one of the preceding claims, wherein the decentralized application deployed on the first programmable distributed ledger network is a meteorological validator, wherein the content data packets are data packets from meteorological sensors.

**52.** The digital locker or digital validator or digital updater or digital system of any one of the preceding claims, wherein the decentralized application deployed on the first programmable distributed ledger network is a market for digital artworks, and in which the content data packets are digital artworks.

**53.** The digital locker or digital validator or digital updater or digital system of any one of the preceding claims, wherein the content data packets identify a real object.

**54.** The digital locker or digital validator or digital updater or digital system of any one of the preceding claims, comprising a plurality of second networks in which the same first message is broadcast, but a plurality of second messages are received comprising different values.

**55.** A method in a digital locker for peer-to-peer transmission of a packet of content data from a transmitting user to a receiving user, wherein the digital locker is deployed in a distributed manner in a first programmable peer-to-peer distributed ledger network configured for executing decentralized applications, wherein the method comprises:

receiving a first message comprising an identifier of the content data packet; and
modifying the state of the content data packet, in the storage means of the first distributed ledger network, to locked, upon receiving the first message, once, in reaction to the first message, the first of at least one second message comprising a value parameter corresponding to the content data packet has been sent.

**56.** The method of claim 55, wherein the content data packet comprises a locking field, which indicates whether the content data packet is locked, or unlocked, from being transmitted between users.

**57.** The method of claim 56, further comprising verifying the legitimacy of the sender of the messages.

**58.** The method of claim 57, wherein legitimacy is checked by verifying the digital signatures of the messages received using the secret key of an asymmetric encryption public-key secret-key pair.

**59.** The method of claim 56, wherein the first message is received together with the second message from an electronic device of a user.

**60.** The method of claim 57, wherein the first message is received from a digital validator external to the first network.

**61.** The method of claim 57, wherein the first message is received from a digital authorizer.

**62.** The method of claim 56, further comprising receiving an unlock message comprising the content data packet identifier, and modifying the state of the content data packet, on the storage means of the first distributed ledger network, to unlocked, upon receiving of the unlock message.

**63.** The method of claim 62, wherein the sender of the unlocking message is a digital validator or is a digital authorizer or is a digital updater.

64. The method of any of the preceding claims, further comprising storing the first message in storage means of the first distributed ledger network.

65. A method in a digital validator for peer-to-peer transmission of a packet of content data from a transmitting user to a receiving user, wherein the method comprises:

receiving a first message, from an electronic device of the transmitting user, comprising an identifier of the content data packet;

receiving, in reaction to the first message, from at least one other electronic device, at least one second message comprising a value parameter corresponding to the content data packet, the at least one other electronic device comprising an electronic device of the receiving user; and

interacting with the digital locker of claim 55, deployed in a distributed manner in a first programmable peer-to-peer distributed ledger network configured for executing decentralized applications, for modifying the state of the content data packet, in the storage means of the first distributed ledger network, to locked, upon receiving a first of the at least one second message.

66. The method of claim 65, wherein the content data packet comprises a locking field, which indicates whether the content data packet is locked, or unlocked, from being transmitted between users.

67. The method of claim 66, further comprising verifying the legitimacy of the sender of the messages.

68. The method of claim 67, wherein legitimacy is checked by verifying the digital signatures of the messages received, using the secret key of an asymmetric encryption public-key secret-key pair.

69. The method of claim 66, wherein the first message is received together with the second message from an electronic device of a user.

70. The method of claim 67, further comprising sending the first message to a digital authorizer or to a digital router.

71. The method of claim 67, wherein the content data packet comprises a holder field, comprising an identifier of the user who is the owner of the content data packet.

72. The method of claim 67, further comprising storing the content-related data in the storage means in an ultra-compressed form by applying a hash function to the result of concatenating all existing data packets, or by generating a Merkle tree, or by generating a sparse Merkle tree where the leaves of the tree correspond to the data packets and storing only the root of the tree.

73. The method of claim 67, further comprising, upon receiving of the first message, triggering a timer defining a first time interval for receiving the second messages.

74. The method of claim 73, further comprising, at the end of the first time interval, identifying the second message with the highest value of all second messages received, and notifying the corresponding user, while triggering a timer defining a second time interval for receiving a proof of payment.

75. The method of claim 74, further comprising, upon receiving of the proof of payment during the second time interval, confirming the transmission of the content data packet from the transmitting user to the receiving user.

76. The method of claim 74, further comprising, if at the expiry of the second time interval no proof of payment has been received, identifying the second message with the next highest value of all the second messages received, and notifying the corresponding user, and at the same time triggering the second time interval timer again, and so on successively, until a proof of payment is received and the transmission is confirmed.

77. The method of claim 75 or 76, wherein confirming the transmission comprises modifying the identifier of the content data packet holder to the identifier of the receiving user, and for modifying the state of the content data packet to unlocked.

78. The method of claim 74, further comprising canceling the transmission and modifying the state of the content data packet to unlocked, once it is determined that all users who have sent second messages have been notified and that no proof of payment has been received.

79. The method of any of the preceding claims, further comprising storing the first message in a storage means of the first distributed ledger network.

80. A method in a digital programmable distributed ledger system for peer-to-peer transmission of a packet of content data from a transmitting user to a receiving user, the method comprising:

sending, by an electronic device of the transmitting user, a first message comprising a unique identifier of the content data packet;
sending, by at least one other electronic device in reaction to the first message, at least one second message comprising a value parameter corresponding to the content data packet, the at least one other electronic device comprising an electronic device of the receiving user; and
modifying, upon receiving of the first of the at least one second message, by the digital validator of claim 65 by interacting with the digital locker of claim 55 deployed in a distributed manner in a first programmable peer-to-peer distributed ledger network configured for executing decentralized applications comprising a plurality of nodes configured for communications directly among eachother, the state of the content data packet in the first distributed ledger network, from unlocked to locked.

81. The method of claim 80, wherein the storage means comprises the unique identifier of the content data packet.

82. The method of claim 81, wherein the content data packet comprises a locking field, which indicates whether the content data packet is locked, or unlocked, from being transmitted between users.

83. The method of claim 82, wherein the content data packet comprises a holder field, comprising an identifier of the user who is the owner of the content data packet.

84. The method of claim 82, wherein the data are stored in the storage means in an ultra-compressed form by applying a hash function to the result of concatenating all existing data packets, or by generating a Merkle tree, or by generating a sparse Merkle tree where the leaves of the tree correspond to the data packets and storing only the root of the tree.

85. The method of claim 82, further comprising verifying the legitimacy of the sender of the messages.

86. The method of claim 85, wherein legitimacy is checked by verifying the digital signatures of the messages received, using the secret key of an asymmetric encryption public-key secret-key pair.

87. The method of claim 82, wherein the first message is received together with the second message from an electronic device of a user.

88. The method of claim 85, wherein the first message is received from a digital validator external to the first network.

89. The method of claim 85, wherein, upon receiving the first of the at least one second message, the digital validator is configured for triggering a timer that defines a first time interval for receiving further second messages.

90. The method of claim 89, wherein, at the expiry of the first time interval, the digital validator identifies the second message with the highest value of all the second messages received, and notifying the corresponding user, and at the same time, triggering a timer that defines a second time interval to receive a proof of payment.

91. The method of claim 90, wherein, upon receiving of the proof of payment during the second time interval, the digital validator confirms the transmission of the content data packet from the transmitting user to the receiving user by sending a confirmation message.

92. The method of claim 90, wherein, if at the expiry of the second time interval no proof of payment has been received, the digital validator identifies the second message with the next highest value of all the second messages received, and notifes the corresponding user, and at the same time, triggers the second time interval timer again, and so on successively, until a proof of payment is received and the transmission is confirmed by sending a confirmation message.

93. The method of claim 91 or 92, further comprising a digital updater deployed in a distributed manner in the first programmable peer-to-peer distributed ledger network, comprising:

receiving the confirmation message comprising an identifier of the content data packet;
modifying the identifier of the owner of the content data packet to the identifier of the receiving user; and
modifying the state of the content data packet to unlocked.

94. The method of claim 93, wherein the sender of the confirmation message is a digital validator, or a digital authorizer.

95. The method of claim 94, comprising canceling the transmission by sending a cancellation message, once it is determined that all users who have sent second messages have been notified and that no proof of payment has been received.

96. The method of claim 95, further comprising,

receiving a cancellation message comprising an identifier of the content data packet; and
modifying the state of the content data packet to unlocked.

97. The method of claim 96, further comprising automatically canceling the transmission, and unlocking the content data packet at the expiry of a third time interval.

98. The method of claim 96, further comprising automatically canceling the transmission at the expiry of a third time interval.

99. The method of claim 96, comprising canceling the transmission upon receiving of a cancellation message of the first message while the content data packet is in the unlocked state.

100. The method of claim 85, further comprising receiving the first message and broadcasting it to all other electronic devices in the second network.

101. The method of claim 85, further comprising, in an initial phase, deploying the storage means, the digital updater, and the digital locker, in a distributed manner on the nodes of the first programmable peer-to-peer distributed ledger network, and deploying the digital routing means and the digital means of authorization on the electronic devices of the second network.

102. The method of claim 101, comprising downloading, on demand, an interface module for installation in at least one electronic device, allowing communications with the different nodes and with the first distributed ledger network, either directly, or through the digital validator, or through the digital authorizer, or through the digital router.

103. The method of any of the preceding claims, wherein the decentralized application deployed on the first programmable distributed ledger network is a massive multiplayer online manager game of a team sport, and wherein the content data packets are players of a team, or a team.

104. The method of any of the preceding claims, wherein the decentralized application deployed on the first programmable distributed ledger network is a meteorological validator, wherein the content data packets are data packets from meteorological sensors.

105. The method of any of the preceding claims, wherein the decentralized application deployed on the first programmable distributed ledger network is a market for digital artworks, and in which the content data packets are digital artworks.

106. The method of claim 94, wherein the content data packets identify a real object.

107. The method of any of the preceding claims, comprising a plurality of second networks in which the same first message is broadcast, but a plurality of second messages are received comprising different values.

108. A computer program which comprises instructions, once executed on a processor, for performing the method steps of any one of claims 55 to 107.

109. A computer readable medium which comprises instructions, once executed on a processor, for performing the method steps of any one of claims 55 to 107.

**FIG. 1**

EP 3 989 151 A1

**FIG. 2**

| 300 | | |
|---|---|---|
| | **310** | |
| | **312** | |
| | **320** | **330** |

340 →

← 345

**FIG. 3A**

| 350 | |
|---|---|
| | **360** |
| | **370** |

**FIG. 3B**

**FIG. 3**

EP 3 989 151 A1

Unique ID:
FV123456789

410

Resistance: 5
Speed: 100
Strength: 89
Ability: 52
...

420

**FIG. 4A**

Unique ID:
FV123456789

410

Hash of the content:
cf23df2207d99a74fbe169
e3eba035e633b65d94

420

**FIG. 4B**

Unique ID:
FV123456789

410

400

**FIG. 4C**

EP 3 989 151 A1

**FIG. 5A**

130      110      120

130 — 131   132    140

310   320   330    360   370

*t1*

560   M3

564

562

*t2*

566

570 / 580

**FIG. 5B**

FIG. 6

| | INTERNATIONAL SEARCH REPORT | International application No. |
|---|---|---|
| | | PCT/ES2020/070023 |

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)
G06Q, H04L

Documentation searched other than minimum documentation to the extent that such documents are included in the fields searched

Electronic data base consulted during the international search (name of data base and, where practicable, search terms used)

EPODOC, INVENES, WPI, INTERNET

**C. DOCUMENTS CONSIDERED TO BE RELEVANT**

| Category* | Citation of document, with indication, where appropriate, of the relevant passages | Relevant to claim No. |
|---|---|---|
| X | US 2019043043 A1 (SARANIECKI WALTER ERIC ET AL.) 07/02/2019, paragraph [2]; paragraph [5]; paragraphs[8 - 16]; paragraphs[77 - 116]; paragraphs[123 - 165]; paragraph [176]; paragraphs[189 - 191]; paragraphs[202 - 215]; paragraphs[218 - 219]; claims 1-7; claims 9-11; claims 20-29; claims 34-35; figure 1, figure 4, figures 13 - 14. figures 20 - 30. | 1-109 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 28/07/2020 | **(29/07/2020)** |
| Name and mailing address of the ISA/ | Authorized officer |
| OFICINA ESPAÑOLA DE PATENTES Y MARCAS Paseo de la Castellana, 75 - 28071 Madrid (España) Facsimile No.: 91 349 53 04 | J. Vazquez Burgos Telephone No. 91 3495513 |

Form PCT/ISA/210 (second sheet) (January 2015)

**INTERNATIONAL SEARCH REPORT**

International application No.

PCT/ES2020/070023

C (continuation).                    DOCUMENTS CONSIDERED TO BE RELEVANT

| Category * | Citation of documents, with indication, where appropriate, of the relevant passages | Relevant to claim No. |
|---|---|---|
| L | B. BLYWIS et al. A Survey of Flooding, Gossip Routing, and Related Schemes for Wireless Multi-Hop Networks. Technical Report TR-NO:TR-B-11-06. Institute Of Computerscience, Freie Universität Berlin, 20/10/2011 [on line][retrieved on 08/07/2020]. Retrieved from <URL: https://refubium.fu-berlin.of/handle/fub188/18401 >, <DOI: http://dx.doi.org/10.17169/refubium-22103 > page 3, último paragraph – page 4, primer paragraph, referencia [5] | 54, 107 |
| A | US 2016092988 A1 (LETOURNEAU DENIS) 31/03/2016, paragraphs[35 - 42]; paragraphs[48 - 68]; paragraphs[74 - 127]; paragraph [132]; claims 1-18; figures 1 - 2. figures 4 - 12. | 1-109 |
| A | WO 2019228564 A2 (ALIBABA GROUP HOLDING LTD) 05/12/2019, paragraphs[5 - 26]; paragraphs[53 - 121]; paragraphs[132 - 133]; paragraphs[148 - 155]; paragraphs[159 - 165]; paragraphs[171 - 172]; paragraph [187]; figures 1 - 4. figures 6 - 7. figures 9 - 10. figure 14, figures 18 - 19. figures 21 - 22. | 1-109 |

Form PCT/ISA/210 (continuation of second sheet) (January 2015)

# EP 3 989 151 A1

<table>
<tr><td><strong>INTERNATIONAL SEARCH REPORT</strong></td><td>International application No.<br>PCT/ES2020/070023</td></tr>
</table>

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☒ Claims Nos.: 5, 15, 21, 25, 34, 42, 44-46, 48, 59, 69, 75, 87, 95, 97-99
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (January 2015)

## INTERNATIONAL SEARCH REPORT

Information on patent family members

| International application No. |
|---|
| PCT/ES2020/070023 |

| Patent document cited in the search report | Publication date | Patent family member(s) | Publication date |
|---|---|---|---|
| US2019043043 A1 | 07.02.2019 | CN111183445 A | 19.05.2020 |
| | | AU2018309748 A1 | 19.03.2020 |
| | | EP3649601 A1 | 13.05.2020 |
| | | WO2019028068 A1 | 07.02.2019 |
| US2016092988 A1 | 31.03.2016 | US2020175601 A1 | 04.06.2020 |
| | | WO2016053760 A1 | 07.04.2016 |
| WO2019228564 A2 | 05.12.2019 | CN111213168 A | 29.05.2020 |
| | | US2020153607 A1 | 14.05.2020 |
| | | US10673619 B1 | 02.06.2020 |

Form PCT/ISA/210 (patent family annex) (January 2015)

**INTERNATIONAL SEARCH REPORT**

International application No.

PCT/ES2020/070023

CLASSIFICATION OF SUBJECT MATTER

*G06Q20/40* (2012.01)
*G06Q30/00* (2012.01)
*H04L9/30* (2006.01)

Form PCT/ISA/210 (extra sheet) (January 2015)